# FASCICULE DE BREVET EUROPEEN

(11) **EP 0 621 157 B1**
(45) Date de publication et mention de la délivrance du brevet: **09.07.1997**
(21) Numéro de dépôt: 94400856.4
(22) Date de dépôt: 20.04.1994
(51) Int. Cl.: B60P 1/48

(54) **Appareil pour permettre à un véhicule de prendre ou de poser au sol une charge telle qu'une benne, et éventuellement de la vider**
Gerät, das einem Fahrzeug ermöglicht, eine Ladung, wie z.B. einen Kübel, aufzunehmen oder auf dem Boden abzusetzen und ihn evtl. zu entleeren
Apparatus for allowing a vehicle, to raise or to lower a load e.g. a skip, to the ground and optionally to empty the same

(30) Priorité: 20.04.1993 FR 9304633
(43) Date de publication de la demande: 26.10.1994
(73) Titulaire: MARREL, F-42160 Andrézieux-Bouthéon (FR)
(72) Inventeur: Chiron, Alain, F-42610 St Romain le Puy (FR); Heritier, Albert, F-42340 Veauche (FR)
(74) Mandataire: Rinuy, Santarelli

(56) Documents cités:
- DE-A- 4 138 512
- DE-C- 2 325 866
- FR-A- 2 109 109

## Description

L'invention a trait à un appareil pour permettre à un véhicule de prendre ou poser au sol une charge telle qu'une benne, cette charge étant munie d'une anse de levage sur une face avant et de deux rails longitudinaux situés respectivement à droite et à gauche sur une face inférieure de la charge.

On connaît un tel appareil qui correspond à celui décrit dans FR-A-2.185.520, mais où la potence est télescopique comme l'enseigne FR-A-2.109.109.

Cet appareil comporte :
- un cadre prévu pour être fixé sur le châssis du véhicule ;
- une structure basculante de manutention montée sur le cadre, comportant une potence télescopique et un faux-châssis, la potence étant articulée à l'arrière sur le faux-châssis qui est lui-même articulé à l'arrière sur le cadre,à l'arrière de celui-ci, la potence comportant un crochet prévu pour s'engager avec l'anse de levage d'une charge, les deux membres d'articulation que porte la structure basculante, respectivement entre la potence et le faux-châssis, et entre le faux-châssis et le cadre, étant prévus pour procurer respectivement au crochet soit un premier, soit un deuxième axe transversal de basculement, la structure basculante admettant une position de prise ou de pose au sol où ledit crochet est derrière le véhicule à une hauteur lui permettant de s'engager avec ou de se libérer de l'anse de levage d'une charge posée sur le sol derrière le véhicule, et une position de transport où la structure basculante présente à l'avant l'un des tronçons de la potence, qui est vertical ou à peu près, et au sommet duquel se trouve le crochet ;
- un vérin de potence pour allonger ou raccourcir l'autre tronçon de la potence, qui est horizontal ou à peu près en position de transport, ce tronçon étant allongé dans la position de transport et raccourci dans une position de début ou de fin de basculement à laquelle on parvient à partir de la position de transport en actionnant le vérin de potence dans le sens du raccourcissement ; et
- un vérin de basculement articulé à l'avant sur le cadre et à l'arrière sur la potence, pour faire basculer la structure basculante entre la position de début ou de fin de basculement et la position de prise ou de pose au sol, la structure basculante étant adaptée à coopérer avec le cadre de sorte qu'il existe entre la position de début ou de fin de basculement et la position de prise ou de pose au sol, une position de changement de membre d'articulation à laquelle on parvient quand la potence vient en butée sur le faux-châssis, le crochet tournant autour du premier axe de basculement (procuré par le membre d'articulation potence-faux-châssis) entre la position de début ou de fin de basculement et la position de changement de membre d'articulation, et autour du deuxième axe de basculement (membre d'articulation faux-châssis-cadre) entre la position de changement de membre d'articulation et la position de prise ou de pose au sol.

L'invention vise à fournir un appareil de même nature mais avec des performances améliorées.

Elle propose à cet effet, un appareil tel que défini dans la revendication 1.

La disposition du vérin de basculement qui caractérise l'invention, permet (voir notamment les caractéristiques préférées exposées ci-après) de disposer le premier et le deuxième membres d'articulation sur la structure basculante de sorte que le vérin de basculement peut travailler avec un bras de levier relativement important aussi bien dans la position de début ou de fin de basculement (où le bras de levier existe vis à vis du premier axe de basculement) que dans la position de prise ou de pose au sol (où le bras de levier existe vis à vis du deuxième axe de basculement).

L'invention permet en particulier de bénéficier, dans la position de début ou de fin de basculement, d'un bras de levier notablement plus important que celui qu'il est possible d'obtenir avec l'appareil antérieur précité. Elle offre ainsi l'avantage de rendre les mêmes services avec un vérin de basculement moins puissant que dans l'appareil antérieur précité, et permet également d'utiliser de l'acier en moins grande quantité ou avec des caractéristiques de résistance mécanique moins élevées puisque les efforts que doit supporter l'appareil sont moins importants.

La disposition du vérin que propose l'invention permet donc de produire un appareil efficace et performant sur le plan économique.

En outre, le fait que le vérin soit articulé sur le cadre par l'arrière, permet de supprimer la traverse avant qui existait sur les appareils antérieurs précités où le vérin était articulé sur le cadre à l'avant.

Cette absence de traverse à l'avant est favorable sur le plan de la sollicitation des longerons du châssis du véhicule puisque d'une part la zone d'application des efforts sur ces derniers est proche du ou des essieu(x) arrière, et d'autre part que le cadre est plus souple et par conséquent n'entrave pas la déformation élastique du châssis du véhicule lors du roulage.

L'absence de traverse à l'avant du cadre rend de surcroît plus facile son implantation sur le châssis du véhicule puisqu'on n'est plus gêné par la présence, derrière le moteur du véhicule, de certains organes comme la boîte de vitesse, la prise de mouvement ou la transmission.

Enfin, l'absence de traverse à l'avant permet une meilleure accessibilité pour le dépannage du moteur du véhicule.

La revendication 2 définit certaines caractéristiques préférées de l'invention.

En prévoyant selon celles-ci que, dans la position de début ou de fin de basculement, le deuxième axe de vérin se situe entre le premier axe de vérin et le premier axe de basculement, et en-dessous de chacun de ceux-ci, on maximise le bras de levier avec lequel travaille le vérin de basculement dans la position de début ou de fin de basculement, compte tenu de la contrainte d'avoir un encombrement en hauteur aussi petit que possible pour la portion de l'appareil situé sous la charge.

La revendication 3 définit d'autres caractéristiques préférées.

Compte tenu de la variation d'inclinaison de la ligne d'action du vérin de basculement, le fait de disposer le deuxième axe de basculement, tel qu'il est dans la position de prise ou de pose au sol, en arrière et en dessous du premier axe de basculement tel qu'il est dans la position de début ou de fin de basculement, permet de maximiser le bras de levier avec lequel travaille le vérin de basculement dans la position de prise ou de pose au sol.

On notera à cet égard que si l'on n'avait prévu qu'un seul membre d'articulation sur la structure basculante, disposé suivant le premier axe de basculement tel que caractérisé ci-dessus, alors on aurait un bras de levier excellent en position de début ou de fin de basculement, mais trop faible en position de prise ou de pose au sol. De même, si le membre d'articulation était disposé suivant le deuxième axe de basculement tel que caractérisé ci-dessus, le bras de levier serait excellent en position de prise ou de pose au sol mais trop faible en position de début ou de fin de basculement.

On voit ainsi que les performances de la présente invention résultent d'un effet de combinaison entre la disposition du vérin de basculement et le changement de membre d'articulation, qui s' effectue pour avoir à tout moment, compte tenu du changement d'orientation du vérin, un axe de basculement disposé de façon judicieuse.

La revendication 4 définit d'autres caractéristiques préférées.

Ainsi, avec ces caractéristiques, la potence se déforme entre la position de transport et la position de début ou de fin de basculement respectivement entre une configuration où son tronçon vertical fait un angle droit ou à peu près avec la poutrelle et une configuration où le tronçon vertical fait avec la poutrelle un angle plus petit (par exemple 60°). Une telle déformation permet de réduire la quantité de basculement nécessaire entre la position de début ou de fin de basculement et la position de prise ou de pose au sol : à quantité égale de basculement vers l'arrière, le crochet est plus bas si la potence est ainsi déformée que si elle était restée avec le tronçon vertical à angle droit par rapport à la poutrelle.

De préférence, ladite équerre comporte un nez caractérisé dans la revendication 5.

Le soulèvement du premier axe de vérin procuré par ce nez incline encore la ligne d'action du vérin de basculement dans le sens qui accroît sa distance vis à vis du premier axe de basculement, et donc dans le sens qui accroît le bras de levier avec lequel travaille ce vérin dans la position de début ou de fin de basculement, ce qui améliore encore l'efficacité et les performances de l'appareil selon l'invention.

D'autres caractéristiques préférées pour des raisons de simplicité, de commodité et d'économie à la mise en oeuvre figurent dans la revendication 6.

Dans une première forme de réalisation, les moyens d'engagement sont tels que caractérisés dans la revendication 7.

La structure basculante est alors inflexible sous l'effet du vérin de basculement pendant la totalité du mouvement entre la position de début ou de fin de basculement et la position de prise ou de pose au sol. Cette forme de réalisation, particulièrement simple, convient dans les cas où il suffit que l'appareil puisse prendre ou poser au sol une charge.

Dans une deuxième forme de réalisation, les moyens d'engagement sont tels que caractérisés dans la revendication 12.

Le fait que la structure basculante ne reste inflexible qu'entre la position de début ou de fin de basculement et la position de changement de membre d'articulation, alors qu'entre la position de changement de membre d'articulation et la position de prise ou de pose au sol le bras rigide reste maintenu au cadre tandis que le reste de la structure basculante pivote vis à vis du bras rigide, permet de procurer le changement de membre d'articulation de façon particulièrement simple, fiable et économique.

En outre, cette deuxième forme de réalisation permet, si on le souhaite, de construire un appareil qui puisse également effectuer des manoeuvres de bennage, c'est-à-dire qui puisse lever la charge par l'avant jusqu'à ce qu'elle soit suffisamment inclinée pour permettre son vidage par gravité après avoir ouvert ses portes arrière.

Des caractéristiques préférées pour rendre possible de telles manoeuvres de bennage figurent dans la revendication 18.

Ces caractéristiques permettent d'obtenir de façon particulièrement simple, commode et économique, un appareil qui peut à la fois réaliser des manoeuvres de prise ou de pose au sol de la charge, et des manoeuvres de bennage de celle-ci.

De préférence, l'appareil comporte des membres de soutien tels que caractérisés dans la revendication 19.

Ces membres de soutien sont situés à l'arrière du bras rigide, maintenus coaxiaux à l'axe de bennage quand agissent les moyens d'immobilisation, et ils s'abaissent vers le cadre de la position de début ou de fin de basculement à la position de changement de membre d'articulation, et vice-versa.

Cette mobilité des membres de soutien peut leur permettre de pouvoir rester en dehors du trajet suivi par les rails entre la position de changement de membre d'articulation et la position de prise ou de pose au sol.

Cela est particulièrement intéressant lorsque l'appareil présente les caractéristiques préférées objet de la revendication 20.

L'appareil présente en effet ainsi des points d'appui arrière pour la charge qui sont différents lors des manoeuvres de prise ou de pose au sol, et lors des manoeuvres de bennage, ces points d'appui étant procurés respectivement par les galets et par les membres de soutien. Du fait que ces derniers soient situés complètement à l'arrière de l'appareil et du véhicule, alors que les galets sont plus en avant, on arrive à la fois à limiter l'inclinaison de la charge lorsqu'elle est prise ou posée au sol, et à permettre de benner avec un angle important sans risque de faire percuter l'arrière de la benne sur le sol ou sur les matériaux qu'elle a précédemment déversés.

L'exposé de l'invention sera maintenant poursuivi par la description d'exemples de réalisation, donnée ci-après à titre illustratif et non limitatif en référence aux dessins annexés sur lesquels :
- la figure 1 est une vue en élévation prise depuis le côté gauche d'un véhicule équipé d'un appareil conforme à l'invention permettant de prendre ou de poser au sol une charge et de réaliser des manoeuvres de bennage, l'appareil étant montré chargé en position de transport, les longerons du cadre et les éléments plus extérieurs étant arrachés pour la clarté du dessin ;
- la figure 2 est une vue similaire, mais avec l'appareil montré en position de début ou de fin de basculement ;
- les figures 3 à 5 sont des vues similaires, respectivement en position de changement de membre d'articulation, en position de prise ou de pose au sol, et en position de bennage ;
- la figure 6 et 7 sont respectivement des agrandissements de la partie de la figure 2 et de la partie de la figure 3 situées aux alentours de la traverse du cadre ;
- la figure 8 montre de façon plus détaillée le raccordement entre la poutrelle et l'équerre de la potence de l'appareil ;
- la figure 9 est la coupe repérée IX-IX sur la figure 8 ;
- la figure 10 est une vue de dessus, en position de transport, du même appareil, mais avec le mécanisme d'actionnement des doigts d'immobilisation des leviers 212 qui a été remplacé par un vérin, tandis que les vérins de basculement et de potence sont l'un en face de l'autre au lieu d'être décalés ;
- la figure 11 est une vue similaire à la figure 6 dans une variante de réalisation ;
- la figure 12 montre pour cette variante la configuration de l'appareil en position de bennage ;
- les figures 13 et 14 sont des vues schématiques montrant d'une manière similaire aux figures 2 et 3 une variante de réalisation de l'appareil ;
- la figure 15 en est une vue similaire en position de prise ou de pose au sol ; et
- la figure 16 est une vue schématique des moyens d'actionnement d'un doigt mobile qui font partie des moyens de maintien par engagement dont est muni le cadre dans cette dernière variante de réalisation.

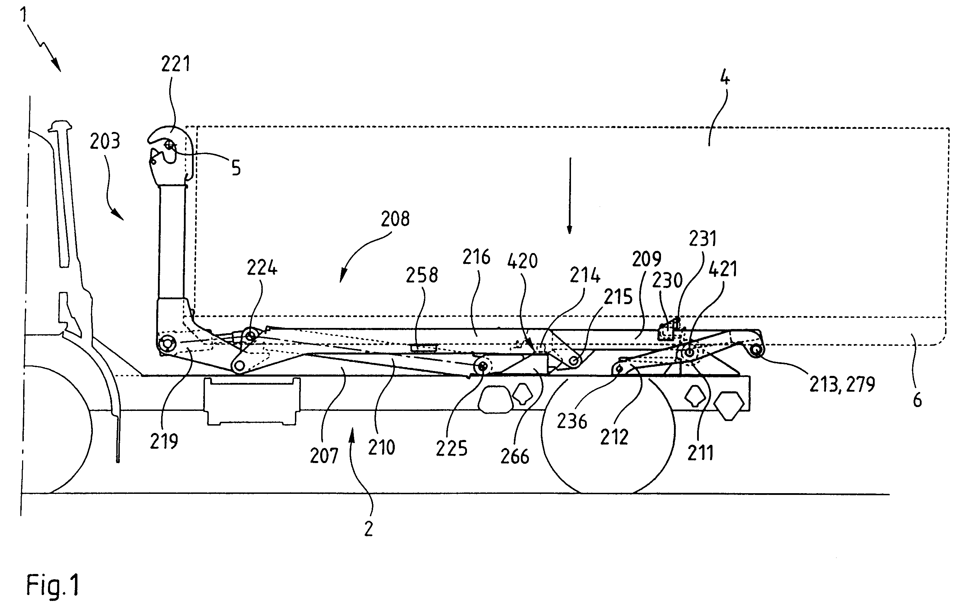

Le véhicule poids lourd ou camion 1 montré sur les figures 1 à 5 comporte un châssis porteur 2 sur lequel est monté un appareil 203 conforme à l'invention pour manipuler une charge telle que la benne 4 montrée en trait interrompu, qui est munie de façon bien connue (voir normes AFNOR NF R 17-108 et DIN 30722) d'une anse de levage 5 sur sa face avant et de deux rails longitudinaux 6 situés respectivement à droite et à gauche sur sa face inférieure.

L'appareil 203 comporte : un cadre 207 fixé sur le châssis 2 ; une structure basculante de manutention montée sur le cadre 207, comportant une potence 208 et un bras rigide 209 ; un vérin hydraulique de basculement 210 disposé entre le cadre 207 et la potence 208 ; un galet 211 monté à rotation sur le cadre 207, prévu de chaque côté pour coopérer avec le rail 6 respectivement droit ou gauche de la charge 4 ; un levier 212 également prévu sur chacun des côtés droit et gauche, articulé à son arrière sur l'arrière du bras rigide 209, et à peu près au milieu sur le même tourillon que celui qui sert au montage à rotation du galet 211, et qui se prolonge vers l'avant au delà de cette articulation ; et également de chaque côté, un membre transversal de soutien 213, monté coaxialement à l'articulation entre le bras rigide 209 et le levier 212, prévu pour coopérer avec le rail 6 situé du côté correspondant.

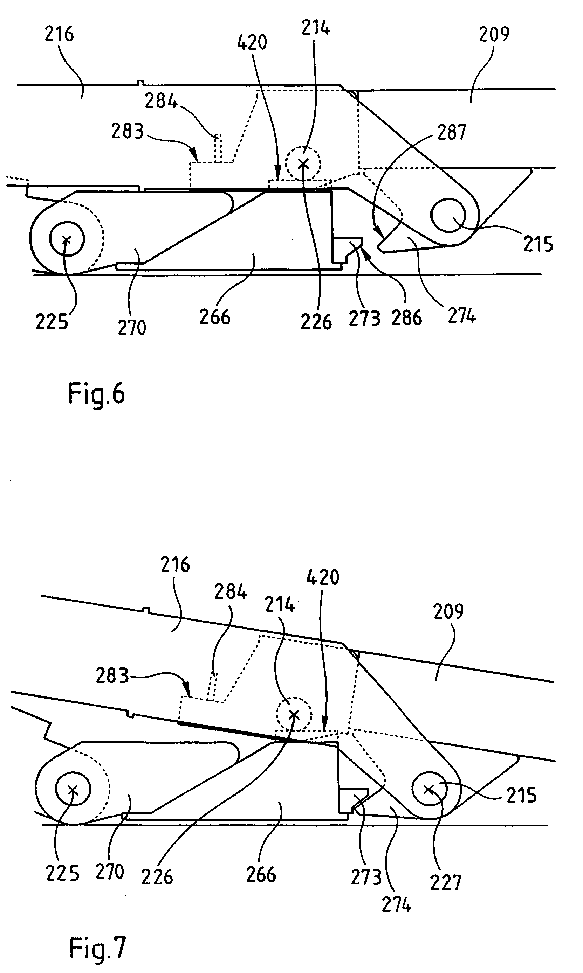

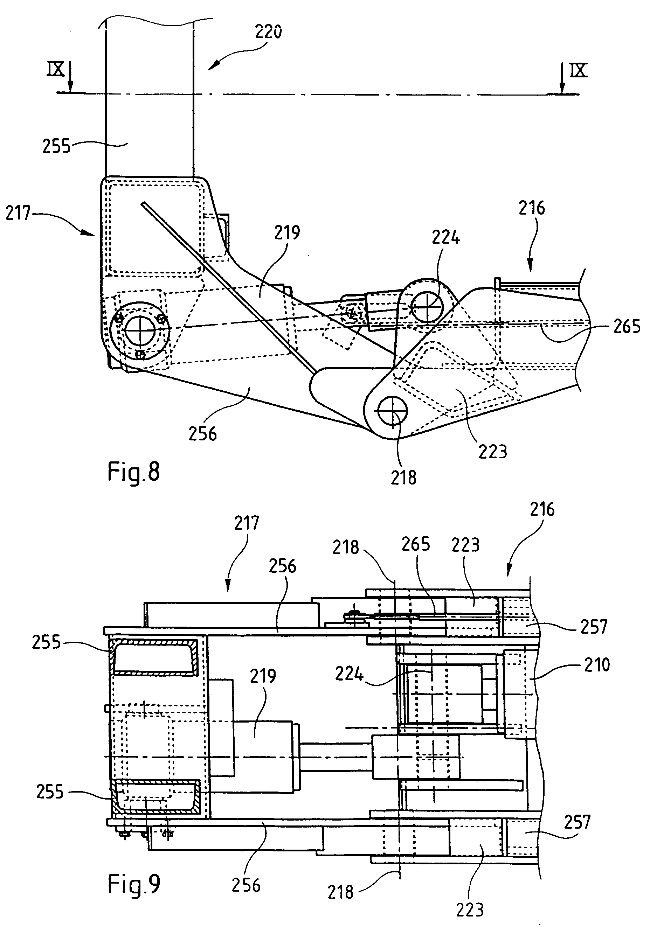

Le bras rigide 209 porte à l'avant (voir également les figures 6 et 7) un premier membre d'articulation 214 et un deuxième membre d'articulation 215 ayant chacun un axe central orienté transversalement. Le reste de la structure basculante, c'est-à-dire la potence 208, comporte : une poutrelle 216 présentant à l'une de ses extrémités des moyens de montage à rotation qui coopèrent avec le membre 215 afin que la potence 208 soit articulée vis à vis du bras 209 autour de l'axe central du membre 215 ; une équerre 217 (voir également les figures 8 et 9) articulée à l'autre extrémité de la poutrelle 216 autour d'un axe de déformation 218 orienté transversalement ; et un vérin de potence 219 disposé entre la poutrelle 216 et l'équerre 217. Le vérin 219 est ici hydraulique, mais en variante, notamment pour des bennes plus petites, il peut être pneumatique.

Dans la position de transport montrée sur les figures 1 et 8 à 10, la potence 208 présente à l'avant un tronçon 220 vertical ou à peu près faisant partie de l'équerre 217, le tronçon 220 étant muni à son sommet d'un crochet 221 prévu pour s'engager avec l'anse de levage 5 de la charge 4. La poutrelle 216 est horizontale ou à peu près et elle se situe sensiblement (ici un peu au dessus) au niveau du cadre 207. Le vérin 219, qui est articulé à chaque extrémité autour d'un axe orienté transversalement, est dans une position où sa tige est sortie.

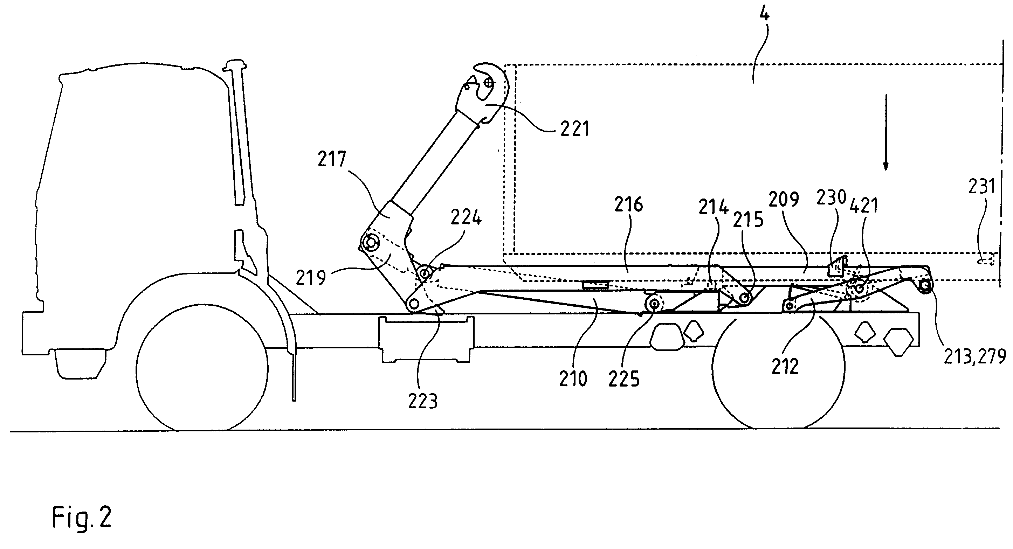

Lorsqu'on fait rentrer la tige du vérin 219, la potence 208 se déforme avec l'équerre 217 qui pivote vis à vis de la poutrelle 216 autour de l'axe de déformation 218, jusqu'à ce que l'on atteigne la position de début ou de fin de basculement montrée sur la figure 2, position dans laquelle le tronçon 220 fait à peu près un angle de 60° avec la poutrelle 216. Le crochet 221, et donc l'anse 5, décrit entre la position de transport et la position de début ou de fin de basculement (respectivement figures 1 et 2) un arc de cercle centré sur l'axe 218, ce mouvement ayant pour effet de faire reculer la charge 4 vis à vis du camion 1, les rails 6 roulant sur les galets 211.

On observera que l'équerre 217 comporte un nez 223 situé en arrière de l'axe 218 dans la position de transport, et qui est adapté à venir prendre appui sur le châssis 2 quand la potence se déforme de la position de transport à la position de début ou de fin de basculement, de sorte que l'avant de la poutrelle 216 se soulève légèrement lorsqu'on passe de la position de transport à la position de début ou de fin de basculement. Le vérin 210, dont la tige est articulée à l'avant de la poutrelle 216 autour d'un premier axe transversal de vérin 224 et dont le corps est articulé sur le cadre 207 autour d'un deuxième axe transversal de vérin 225, va donc voir sa ligne d'action se redresser légèrement vers la verticale.

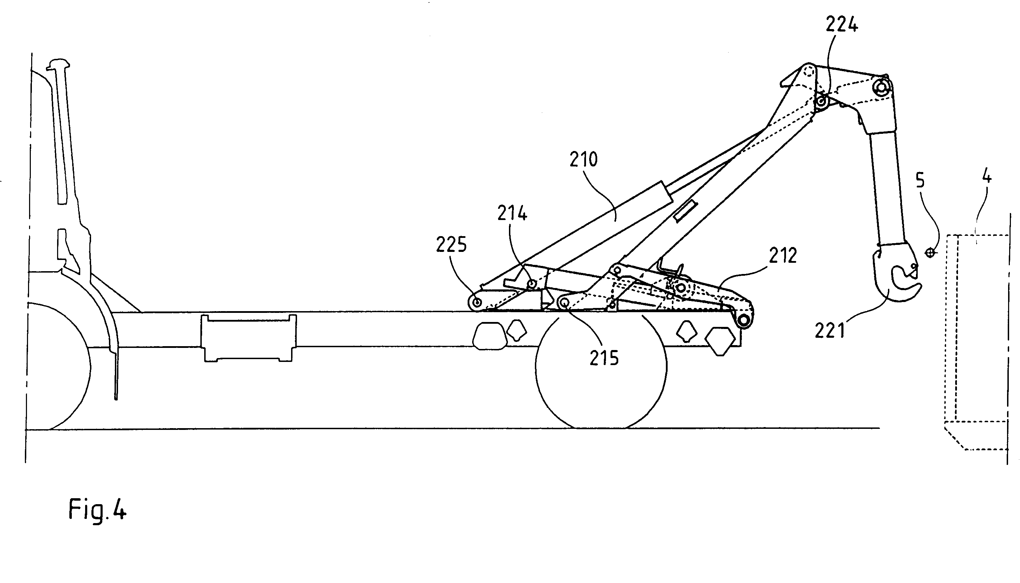

L'appareil 203 est prévu pour qu'on fasse ensuite sortir la tige du vérin 210, afin que la structure basculante formée par le bras rigide 209 et la potence 208 passe de la position de début ou de fin de basculement montrée sur la figure 2 à la position de pose ou de prise au sol montrée sur la figure 4, dans laquelle le crochet 221 est derrière le véhicule 1 à une hauteur lui permettant de s'engager avec ou de se libérer de l'anse de levage 5 de la charge 4 posée sur le sol, même légèrement en contrebas du niveau des roues du camion 1, ainsi qu'illustré sur la figure 4.

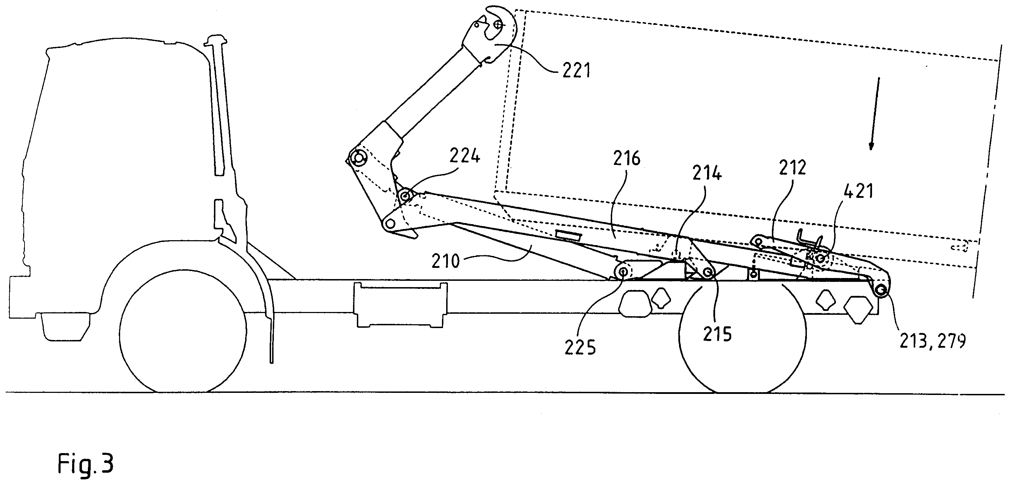

De la position de début ou de fin de basculement (figure 2) à la position de pose ou de prise au sol (figure 4), le crochet 221 et donc l'anse 5 basculent d'abord autour d'un premier axe transversal de basculement 226 qui correspond à l'axe central du membre 214, jusqu'à la position de changement de membre d'articulation montrée sur les figures 3 et 7, position de changement de membre d'articulation à partir de laquelle le crochet 221 bascule autour d'un deuxième axe transversal de basculement 227, qui correspond à l'axe central du membre 215.

Le fonctionnement de l'appareil qui vient d'être décrit, où il passe de la position de la figure 1 à celle de la figure 4, correspond à une manoeuvre de pose au sol de la charge 4. Pour prendre au sol une telle charge, le fonctionnement de l'appareil 3 est similaire mais s'effectue en sens inverse. Bien entendu, si le camion 1 était arrivé non chargé pour prendre au sol une benne 4, l'appareil 203 serait passé de la position de transport à la position de pose ou de prise au sol en fonctionnant à vide ; et de même l'appareil serait passé de la position de pose ou de prise au sol à la position de transport en fonctionnant à vide si le camion était arrivé avec une charge 4 qu'il avait posée au sol puis était reparti sans devoir prendre une autre charge.

On observera que le premier axe de basculement 226 est au dessus et en arrière de l'axe de vérin 225 et que dans la position de début ou de fin de basculement (figure 2) l'axe de vérin 224 est au dessus et en avant de l'axe de vérin 225. La ligne d'action du vérin 210, qui passe par les axes 224 et 225, est donc relativement distante du premier axe de basculement 226, c'est-à-dire que le vérin 210 présente un bras de levier relativement important dans la position de début ou de fin de basculement. Ce bras de levier est d'ailleurs augmenté par le léger soulèvement de l'axe de vérin 224 que procure le nez 223 de la position de transport à la position de début ou de fin de basculement.

On observera également que le deuxième axe de basculement 227 est en arrière et en dessous du premier axe de basculement 226 et que dans la position de prise ou de pose au sol (figure 4) l'axe de vérin 224 est au dessus et en arrière de l'axe de vérin 225. Là aussi, le vérin 210 présente un bras de levier relativement important vis à vis de l'axe de basculement 227.

Pour permettre automatiquement le changement de membre d'articulation qui se produit dans la position de la figure 3, la structure basculante formée par le bras rigide 209 et par la potence 208 est adaptée à rester inflexible sous l'effet du vérin 210 entre la position de début ou de fin de basculement (figure 2) et la position de changement de membre d'articulation (figure 3), et le cadre 207 comporte des moyens d'engagement pour les premier et deuxième membres d'articulation 214 et 215 que porte le bras 209, ces moyens d'engagement étant adaptés à ce que le premier membre d'articulation 214 soit maintenu en prise sur le cadre de la position de début ou de fin de basculement à la position de prise ou de pose au sol, et à ce que le deuxième membre d'articulation 215 soit libre de pivoter vis à vis du cadre, autour du premier axe de basculement 226, entre la position de début ou de fin de basculement (figure 2) et la position de changement de membre d'articulation (figure 3), et soit maintenu en prise sur le cadre entre la position de changement de membre d'articulation (figure 3) et la position de prise ou de pose au sol (figure 4) avec son axe central qui coïncide avec le deuxième axe de basculement 227.

Les moyens d'engagement dont est muni le cadre 7 sont ainsi adaptés à maintenir le bras rigide 209 en prise sur le cadre entre la position de changement de membre d'articulation (figure 3) et la position de prise ou de pose au sol (figure 4), le reste de la structure basculante, c'est-à-dire la potence 208, étant adapté, entre ces positions, sous l'effet du vérin 210, à pivoter vis à vis du bras rigide 209 autour du deuxième axe de basculement 227.

Le bras rigide 209 pivote donc vis à vis du cadre 207 autour du premier axe de basculement 226 entre la position de la figure 2 et celle de la figure 3, alors qu'il reste maintenu au cadre entre la position de la figure 3 et celle de la figure 4.

Par conséquent, pour que l'appareil 203 puisse prendre ou poser au sol une charge 4, il est nécessaire que les leviers 212 puissent passer de la position qu'ils ont dans les figures 1 et 2 où ils sont inclinés avec leur avant qui est plus bas que leur arrière, à la position des figures 3 et 4 où ils sont inclinés à l'inverse.

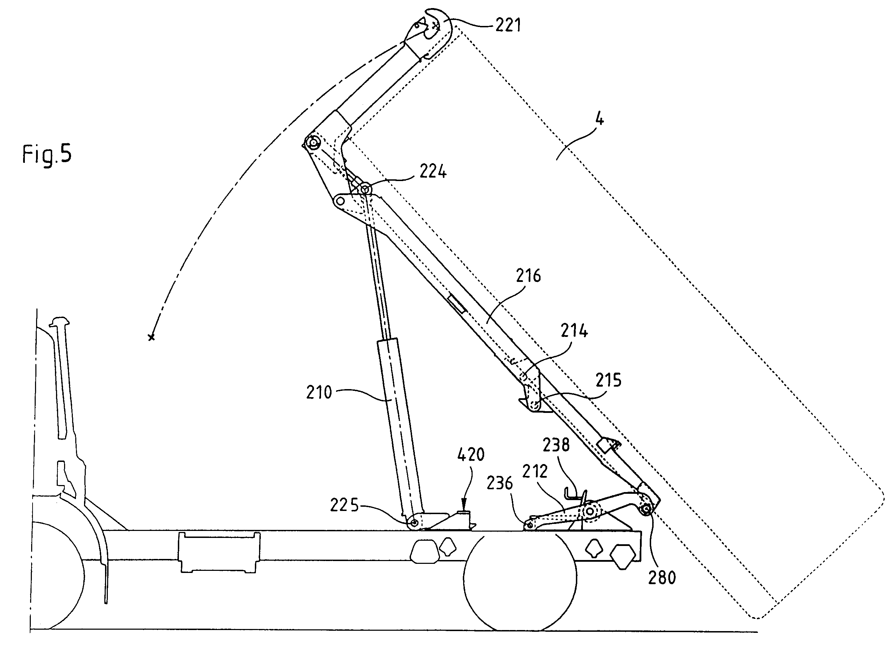

Si au contraire on bloque les leviers 212 quand on est dans la position de transport, si on rigidifie la structure 208 et 209 pour empêcher que la potence 208 ne puisse pivoter autour du bras rigide 209, et si les moyens d'engagement dont est muni le cadre 207 sont adaptés à laisser le membre d'articulation 214 libre de pivoter autour de l'articulation entre les leviers 212 et le bras 209, alors on rend possible que l'ensemble de la structure 208 et 209 pivote autour de cette articulation lorsqu'on actionne le vérin 210 à partir de la position de transport (figure 1), jusqu'à la position de bennage montrée sur la figure 5 : la charge 4 a elle-même pivoté autour de cette articulation et se retrouve inclinée avec l'avant en haut et l'arrière en bas, ce qui lui permet de se vider sur le sol si l'on a ouvert sa porte arrière.

Dans l'exemple de réalisation montré sur les figures 1 à 5, les moyens de rigidification pouvant agir pour empêcher la potence 208 de pivoter vis à vis du bras rigide 209, utilisent la rigidité de la charge 4 et les butées bien connues (voir norme AFNOR NF R 17-108) qui servent à positionner correctement le centre de gravité de la charge 4 vis à vis du camion 1 dans la position de transport : il est prévu sur le bras rigide 209 une traverse 230 portant un couple de butées femelles normalisées adaptées à coopérer avec un couple de butées mâles normalisées 231 prévues sur la face inférieure de la charge 4, les butées mâles 231 pénétrant dans les butées femelles jusqu'à être en arrêt sur la traverse 230, lorsque l'appareil 203 passe de la position de début ou de fin de basculement (figure 2) à la position de transport (figure 1) : ce sont la traverse 230 et les butées 231 qui déterminent à quel moment la tige du vérin 219 est suffisamment sortie pour que l'on soit dans la position de transport, les butées 231 étant disposées à un emplacement prédéterminé par rapport à la position prévisible du centre de gravité de la charge 4.

La rigidification entre le bras 209 et la potence 208 est obtenue grâce à la rigidité de la charge 4 et au fait que le bras 209 soit en prise avec cette dernière par les butées normalisées et avec la potence 208 par le crochet 221 qui est engagé dans l'anse 5.

Il est possible, en complément ou en substitution, d'obtenir la rigidification grâce à un ou deux crochet(s) comme il sera décrit plus loin à l'appui des figures 8 à 10.

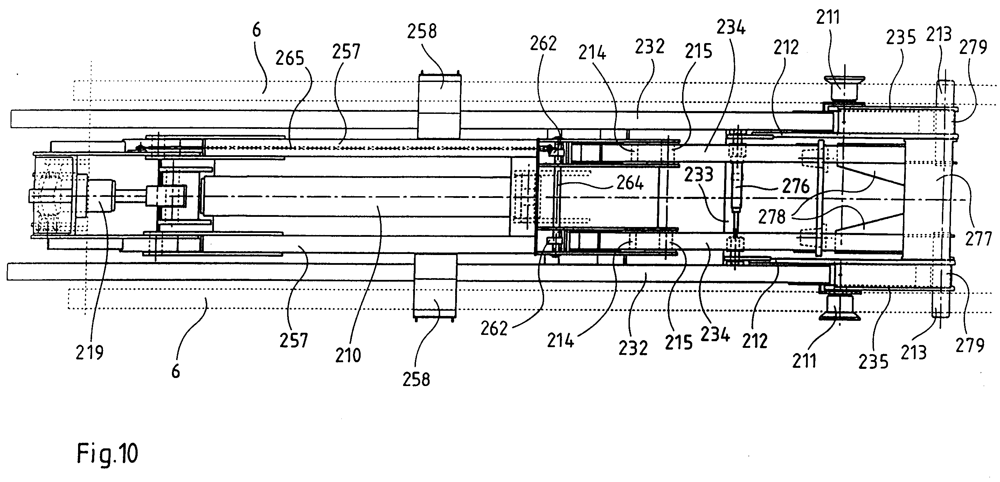

Ainsi qu'on le voit sur la figure 10, le cadre 207 comporte deux longerons 232 (respectivement à droite et à gauche) et une plaque horizontale 233 disposée entre les longerons 232, à l'arrière et au niveau de leur base. Le bras rigide 209 comporte lui aussi deux longerons 234 respectivement droit et gauche qui sont disposés entre les longerons 232.

Chaque levier 212 est contigu au côté interne de l'un des longerons 232 du cadre 207, et est partiellement doublé par un levier complémentaire 235 contigu à un côté externe de ce longeron, chaque levier complémentaire 235 étant articulé à l'arrière de la même façon que le levier 212 qu'il double, il est également articulé sur le tourillon transversal qui sert au montage à rotation du galet 211, mais il ne se prolonge pas vers l'avant au delà de cette articulation.

Dans l'appareil 203, les moyens d'immobilisation pouvant agir pour immobiliser vis à vis du cadre 207 les leviers 212, et donc pour immobiliser l'articulation entre ces derniers et le bras rigide 209 dans la position qu'a cette articulation sur les figures 1 et 5, comportent pour chaque levier 212 un organe d'immobilisation 236 lié au cadre et mobile par rapport à celui-ci entre une position rétractée (figures 2 à 4) et une position sortie (figures 1 et 5). L'organe d'immobilisation 236 est ici un doigt monté coulissant dans un guide fixé sur la plaque 233, le doigt 236 étant adapté à s'engager également dans un trou du longeron 232 quand il passe de la position sortie à la position rétractée.

Comme on le voit notamment sur les figures 1 et 5, l'extrémité avant du levier 212 rentre en contact avec la plaque 233 quand le bras rigide 209 est relevé, et c'est dans cette position que le doigt 236 est prévu pour passer de la position rétractée à la position sortie ou vice-versa, le levier 212 comportant un trou à l'emplacement correspondant.

Dans l'appareil 203 (sauf dans le cas de la figure 10), les moyens d'actionnement de l'organe d'immobilisation 236 qui servent à le faire passer de la position rétractée à la position sortie ou vice-versa, comportent un mécanisme adapté à être entraîné entre la position de début ou de fin de basculement (figure 2) et la position de transport (figure 1) par l'une des butées mâles 231, ce mécanisme entraînant à son tour l'organe 236 entre la position sortie et la position rétractée.

Ainsi, les moyens d'immobilisation des leviers 212 sont automatiquement rendus actifs lorsque la structure basculante passe de la position de début ou de fin de basculement à la position de transport, et inversement.

On notera que les moyens de rigidification de la structure basculante que comporte l'appareil 203 sont également rendus actifs ou inactifs entre les mêmes positions.

Le tronçon vertical 220 de l'équerre 217 présente, lorsqu'on le regarde depuis l'avant, une forme en V renversé dont les branches 255 se rejoignent en haut au niveau du crochet 221, tandis qu'en bas ils se raccordent chacun à une poutre transversale portée par deux flasques longitudinaux 256 respectivement droit et gauche entre lesquels se trouve le vérin de potence 219, les flasques 256 s'articulant chacun autour de l'axe 218 sur l'un des longerons 257 respectivement droit et gauche de la poutrelle 216, le vérin de basculement 210 étant disposé entre ces longerons 257.

Ainsi qu'on le voit notamment sur la figure 10, chacun des longerons 257 porte un support 258 qui s'étend transversalement vers l'extérieur. Les supports 258 servent d'une part, grâce à leur face inférieure, à procurer un moyen de support dans la position de transport entre la poutrelle 216 et les longerons 232 du cadre 207, et grâce à leur face supérieure à procurer un soutien et un centrage pour les rails 6 de la charge 4 (voir figures 1 et 2).

On notera (voir figure 10) que les membres d'articulation 214 et 215 sont chacun en deux tronçons respectivement droit et gauche, portés par les longerons 234.

Afin de compléter, voire de se substituer, à la rigidification entre la poutrelle 216 et le bras rigide 209 procurée par la coopération entre les butées mâles et femelles 230 et 231, la poutrelle 216 de l'appareil montré sur les figures 1 à 10 comporte à l'avant un crochet 262 (figure 10) qui est mobile entre une position de rigidification où il est engagé avec l'extrémité avant de l'un des longerons 234 du bras 209 de sorte que la potence 208 ne peut pas pivoter vis à vis du bras 209, et une position de déverrouillage à laquelle parvient le crochet en basculant de sorte que sa partie basse se dégage de l'avant de la traverse 234, ce qui rend la potence 208 libre de pivoter vis à vis du bras 9 autour de l'axe central du membre d'articulation 215. Les deux crochets 262 sont reliés par une tige 264 qui sert à leur montage à rotation, et ils sont entraînés par la tige 265 dont l'une des extrémité est articulée au crochet 262 situé à droite de l'appareil, alors que l'autre extrémité est articulée sur l'équerre 217, et plus précisément sur le flasque 256 situé à droite, la tige 265 passant à l'intérieur du longeron 257 prévue à droite.

Les crochets 262 sont en position de rigidification quand la tige du vérin 219 est sortie, c'est-à-dire quand l'appareil est en position de transport, et quand la tige du vérin 219 rentre, le pivotement de l'équerre 217 autour de l'axe de déformation 218 entraîne la tige 265 dans le sens où elle fait passer les crochets 262 dans la position de déverrouillage.

On voit que là aussi les moyens de rigidification entre la potence 208 et le bras 209 sont rendus actifs automatiquement quand l'appareil passe de la position de début ou de fin de basculement à la position de transport.

Le cadre 7 comporte, en outre des longerons 232 et de la plaque arrière 233, une traverse 266 (figures 1, 6 et 7) située juste en avant des roues arrière du véhicule 1, avec deux flasques verticaux 270 prévus pour le montage à rotation du vérin 210 autour de l'axe 225, et à l'emplacement où viennent chacun des longerons 234 du bras rigide 209, en partie basse, un becquet 273 destiné à coopérer avec un mentonnet 274 que comporte chacun de ces longerons (voir plus loin).

Dans l'appareil de la figure 10, les moyens d'actionnement des doigts 236 sont formés par un vérin pneumatique 276 à chaque extrémité duquel est fixé l'un des doigts 236. Le vérin 276 peut être commandé par un opérateur, pour engager les doigts 236 dans les leviers 212 alors que l'appareil est en position de transport. L'actionnement du vérin 276, et permet ensuite, en actionnant le vérin 210, de réaliser une manoeuvre de bennage. On peut également prévoir un détecteur pour actionner automatiquement, comme indiqué précédemment, le vérin 276, quand l'appareil arrive en position de transport, et inversement quand l'appareil quitte la position de transport.

Comme on le voit sur la figure 10, le bras rigide 209 comporte derrière les longerons 234 des profilés transversaux 277 qui relient ces longerons, avec des plaques triangulaires 278 prévues entre les longerons 234 et les profilés 277 pour la solidité du bras 2099. Les profilés 277 vont plus en arrière que la limite arrière du cadre 207, et ils portent un troisième membre d'articulation 279 formé ici pour des raisons d'économie par deux tronçons respectivement droit et gauche, ayant un axe central transversal qui coïncide lorsque l'appareil est dans la position de transport avec l'axe de bennage 280 autour duquel pivotent la structure 208 et 209 et la benne 4 quand l'appareil passe de la position de transport à la position de bennage. En revanche, quand l'appareil passe de la position de début ou de fin de basculement à la position de changement de membre d'articulation, le troisième membre d'articulation s'abaisse jusqu'à une position qu'il garde quand le bras rigide est maintenu au cadre entre la position de changement de membre d'articulation et la position de prise ou de pose au sol.

Chacun des leviers 212 et 235 s'articule par rapport au bras rigide 209 en étant articulé autour du membre d'articulation 279.

Les membres de soutien 213 sont solidarisés au bras rigide 209 coaxialement au membre d'articulation 279. On observera (voir la figure 1) que la portion du galet 211 qui est en contact avec le rail 6 de la charge 4 est au niveau ou à peu près de la portion du membre 213 qui est en contact avec ce rail 6.

On notera à cet égard que l'appareil 203 présente des points d'appui arrière pour la charge 4 qui sont différents lors des manoeuvres de prise ou de pose au sol, et lors des manoeuvres de bennage : dans cette dernière manoeuvre, les points d'appui sont procurés par les membres de soutien 213 et lors des manoeuvres de prise ou de pose au sol ce sont les galets 211 qui procurent les points d'appui, l'appareil étant prévu pour que l'abaissement des membres de soutien 213, entre la position de début ou de fin de basculement (figure 2) et la position de changement de membre d'articulation (figure 3), les mette en dehors du trajet suivi par les rails 6 entre la position de prise ou de pose au sol (figure 4) et la position de changement de membre d'articulation.

L'intérêt d'avoir des moyens d'appui distincts est que l'on peut placer ceux qui servent lors des manoeuvres de prise ou de pose au sol (les galets 211) suffisamment en avant pour limiter leur porte-à-faux vis à vis de l'essieu arrière du véhicule 1, et pour limiter l'inclinaison que prend la charge 4. L'avantage de limiter le porte-à-faux est d'éviter les risques que le véhicule se cabre au cours d'une manoeuvre de prise ou de pose au sol alors que les avantages de limiter l'inclinaison de la charge lors d'une manoeuvre de prise ou de pose au sol sont d'éviter que le contenu de la benne ne puisse se déverser au dessus de sa face arrière et également de permettre que la charge soit prise ou posée au sol sans qu'elle atteigne des hauteurs considérables qui interdiraient une telle manoeuvre dans un hangar.

L'intérêt de placer les moyens d'appui qui servent au bennage (les membres de soutien 213) aussi en arrière et en hauteur que possible, est de permettre d'atteindre des angles de bennage particulièrement importants (voir figure 5) sans qu'il y ait un risque que l'arête inférieure arrière de la charge ne rencontre le sol ou les matériaux qui se sont précédemment déversés par la porte arrière de la charge préalablement ouverte.

On notera que les leviers 212 susceptibles d'être accrochés au cadre 207 sont des moyens particulièrement commodes pour immobiliser les membres d'articulation 279 dans une position où leur axe central coïncide avec l'axe de bennage 280, mais qu'il est possible en variante d'utiliser d'autres moyens d'immobilisation, par exemple un vérin fixé verticalement au cadre 207, dont la tige lorsqu'elle est sortie empêche le bras rigide 209 de s'abaisser vers le cadre 207 alors que quand elle est rentrée le bras 209 peut s'abaisser librement jusqu'à rencontrer le cadre 207.

On observera que, du fait que les leviers 235 ne se prolongent pas vers l'avant au delà de leur articulation sur le même tourillon que celui des galets 211, le centre de gravité de l'ensemble 212 et 235 est en arrière de l'axe du tourillon. Par conséquent, l'ensemble formé par les leviers 212 et 235 exerce sous l'effet de son poids une force dirigée vers le bas à l'arrière du bras rigide 209. Celui-ci a donc tendance à s'abaisser spontanément, ce qui est favorable pour faire rester inflexible la structure 208 et 209 entre la position de début ou de fin de basculement (figure 2) et la position de changement de membre d'articulation (figure 3).

Le bras rigide 209 comporte un premier et un deuxième moyens de butée situés respectivement à l'avant et à l'arrière pour coopérer respectivement avec la poutrelle 216 et le cadre 207.

Le premier moyen de butée (voir notamment figures 6 et 7) est un plat 283 qui est horizontal ou à peu près dans la position de transport (figure 1), qui est prévu pour coopérer avec un moyen de butée de la poutrelle 216 disposée de sorte que celle-ci soit libre de pivoter vers l'arrière vis à vis du bras rigide 209, alors qu'il rentre en contact avec le plat 283 pour interdire à la potence 208 de pivoter vers l'avant vis à vis du bras rigide au delà de la position à peu près alignée que prennent le bras rigide et la poutrelle 216 dans la position de changement de membre d'articulation. Le moyen de butée de la poutrelle 216 est ici une plaque 284 verticale ou à peu près dans la position de transport, et qui rentre en contact avec le plat 283 par sa face inférieure étroite. On notera que le point de contact entre le plat 283 et la plaque 284 est situé tout à l'avant du bras 209, et donc aussi éloigné que possible du membre d'articulation 215.

Le deuxième moyen de butée que comporte le bras rigide 209 à l'arrière (voir figure 10) est formé par le dessous des profilés 277 qui rentre en contact avec la plaque 233 du cadre 207 dans la position de changement de membre d'articulation.

On observera que le fait de prévoir le deuxième moyen de butée du bras 209 à l'extrême arrière de celui-ci, offre d'une part l'avantage de maximiser la course en rotation entre la position de début ou de fin de basculement et la position de changement de membre d'articulation, et d'autre part l'avantage de minimiser l'effort s'exerçant sur le becquet 273 lorsqu'il sert à maintenir le bras 209 en prise sur le cadre 207, c'est-à-dire entre la position où les axes 224, 226 et 227 sont coplanaires et la position de prise ou de pose au sol, comme expliqué ci-après.

Les moyens d'engagement dont est muni le cadre 207 pour les membres d'articulation 214 et 215 afin que puisse se produire le changement entre les axes 226 et 227 comportent : la plaque 233 qui sert de moyen de butée pour le moyen de butée formé par le dessous des profilés 277 du bras 209 ; les becquets 273 sous lesquels viennent se mettre en regard les mentonnets 274 du bras 209 lorsque l'appareil passe de la position de début ou de fin de basculement (figure 2) à la position de changement de membre d'articulation (figure 3), et inversement ; et les méplats 420 qui servent d'organe de maintien en prise pour le membre d'articulation 214.

Le couple qui s'exerce sous l'effet du vérin de basculement 210 sur le bras rigide 209 change de sens dans la position où les axes 226 et 227 sont coplanaires avec l'axe de vérin 224. En effet, le bras rigide 209 est maintenu sur le cadre 207 :
- entre la position de changement de membre d'articulation (figure 3) et la position précitée, grâce à la réaction qu'exerce le méplat 420 sur le membre 214 et à la réaction qu'exerce la plaque 233 sur le dessous des profilés 277 du bras 209, car le couple qui s'exerce sous l'effet du vérin 210 est dans le même sens que celui dans lequel pivote le bras 209 de la position de début ou de fin de basculement (figure 2) à la position de changement de membre d'articulation (figure 3) ; et
- entre la position précitée et la position de prise ou de pose au sol (figure 4) grâce à la réaction qu'exerce la plaque 233 sur le dessous des profilés 277 et à la réaction qu'exerce le becquet 273 sur le mentonnet 274, ainsi que grâce à l'engagement par contact de ces derniers, la certaine liberté que laisse le méplat 420 au membre 214 permettant que le mentonnet 274 vienne en appui sur le becquet 273.

On notera à cet égard que la face inférieure 286 du becquet 273, sur laquelle vient en contact le mentonnet 274, est perpendiculaire à une droite joignant l'axe de basculement 226 et le centre de cette face 286.

Dans une variante non représentée, pour éviter qu'il y ait un glissement entre le becquet 273 et le mentonnet 274 alors qu'ils doivent rester maintenus l'un à l'autre, on prévoit des moyens d'engagement par obstacles, et notamment des petites rainures transversales sur la face 286 dans lesquelles s'engagent des petites nervures prévues sur la face supérieure 287 du mentonnet 274.

Chaque levier 212 est articulé, grâce à un palier, sans jeu sur le tourillon 421 qui sert au montage à rotation du galet 211 situé du même côté que lui, et le premier membre d'articulation 214 peut glisser le long du méplat 420 entre la position de début ou de fin de basculement (figures 2 et 6) et la position de changement de membre d'articulation (figures 3 et 7).

Plus précisément, le membre d'articulation 214 glisse sur le méplat 420 en avançant le long de celui-ci de la position de début ou de fin de basculement à la position de changement de membre d'articulation : étant donné que le levier 212 est monté à rotation sur le tourillon 421, son extrémité arrière qui est montée à rotation sur le bras rigide 209 va décrire un arc de cercle centré sur l'axe central du tourillon 421, et va donc, de la position de début ou de fin de basculement à la position de changement de membre d'articulation, avancer légèrement en même temps qu'elle s'abaisse, le bras rigide 209 articulé à l'arrière des leviers 212 va donc lui aussi avancer légèrement, tandis que le membre d'articulation 214 glisse sur le méplat 420.

On observera que l'axe central du membre d'articulation 215 se trouve à tout moment, entre la position de début ou de fin de basculement (figure 3) et la position de changement de membre d'articulation (figure 4), au dessus de la ligne d'action du vérin 210, qui passe par les axes 224 et 225. Dans ces conditions, la poutrelle 216 est soumise de la part du vérin 210 à une force ayant une première composante orientée suivant la direction passant par l'axe 224 et par l'axe central du membre 215, et une deuxième composante dirigée vers le bas. La première composante est reprise par le bras 209 au niveau du membre d'articulation 215, tandis que la deuxième composante est reprise par le cadre 207 au niveau du membre 214, étant donné que la poutrelle 216 et le bras 209 forment alors un ensemble inflexible. C'est la deuxième composante, dirigée vers le bas, qui fait que le membre 214 reste plaqué sur le méplat 420 entre la position de début ou de fin de basculement et la position de changement de membre d'articulation.

On observera également que l'axe central du troisième membre d'articulation 279, c'est-à-dire l'axe d'articulation entre le bras 209 et les bras 212, reste, entre les positions précitées, en dessous du plan passant par l'axe central du membre 215 et l'axe central du tourillon 421, y compris dans la position de début ou de fin de basculement (figure 2). Cela permet que la force qui s'exerce sur le bras 209 au niveau du membre 215 sollicite l'arrière du bras 212 pour le faire s'abaisser de la position de début ou de fin de basculement à la position de changement de membre d'articulation, et pour le faire se relever en sens inverse. Si au contraire l'axe d'articulation entre le bras 209 et les leviers 212 était au dessus du plan précité dans la position de début ou de fin de basculement, les bras 212 seraient sollicités dans le mauvais sens et l'appareil 203 resterait bloqué dans cette position.

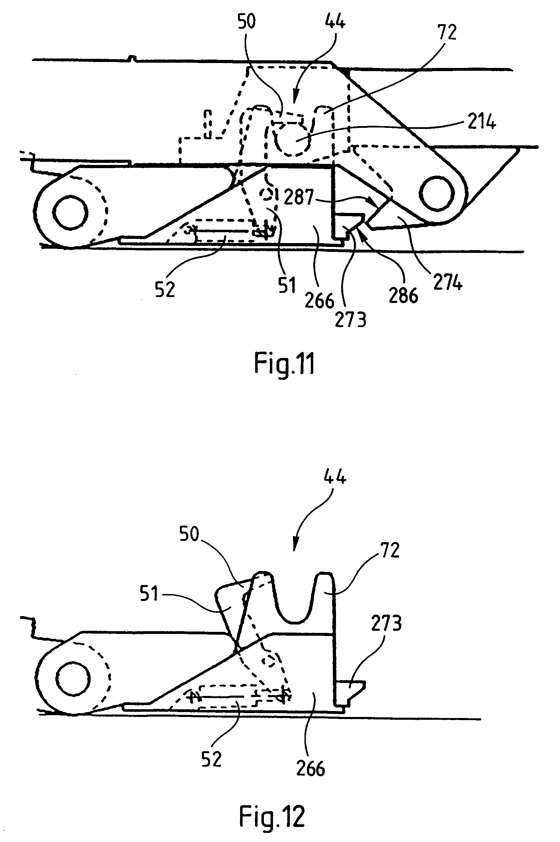

Dans la variante montrée sur les figures 11 et 12, le méplat 420 est remplacé par une gorge 44 ayant une forme en V dont le fond a le même arrondi que celui du membre 214, la gorge 44 étant procurée par une fourche 72, les moyens d'engagement du cadre 207 comportant en outre un doigt mobile 50 faisant partie d'un crochet 51, le doigt 50 pouvant se déplacer entre la position de la figure 12 où la gorge 44 est ouverte vers le haut de sorte que le membre d'articulation 214 est libre d'y rentrer ou d'en sortir, et la position de la figure 11 où la gorge 44 est fermée avec le membre 214 qui y est retenu en place. Pour actionner le doigt mobile, il est prévu un petit vérin, ici un vérin pneumatique 52 qui est tige rentrée dans la position de la figure 11 et tige sortie dans la position de la figure 12.

Les fourches 72 sont adaptées à maintenir le membre 214 avec son axe central qui coïncide avec l'axe 226 entre la position de début ou de fin de basculement (figure 2) et la position de changement de membre d'articulation (figure 3).

Au lieu d'être articulé sans jeu sur le tourillon 421, chaque levier 212 est engagé sur ce tourillon par une lumière oblongue orientée longitudinalement, afin de permettre le fonctionnement de l'appareil bien que le membre 214 ne puisse se déplacer longitudinalement comme montré sur les figures 6 et 7.

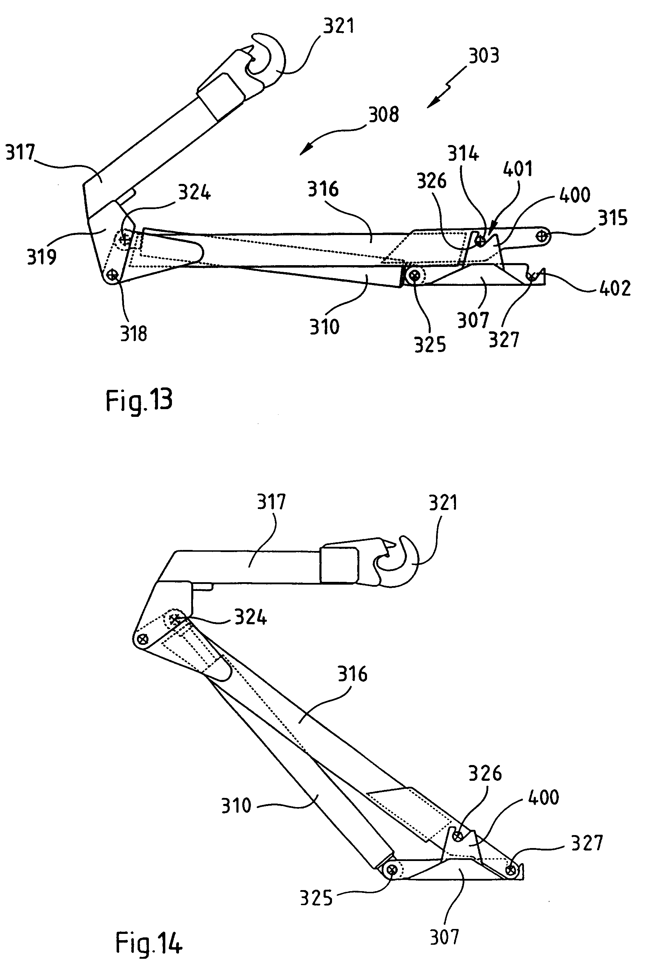

L'appareil montré sur les figures 13 à 16, ne permet pas d'effectuer des manoeuvres de bennage. Les éléments similaires à ceux des appareils décrits à l'appui des figures 1 à 10 portent des références numériques correspondantes additionnées du chiffre 100.

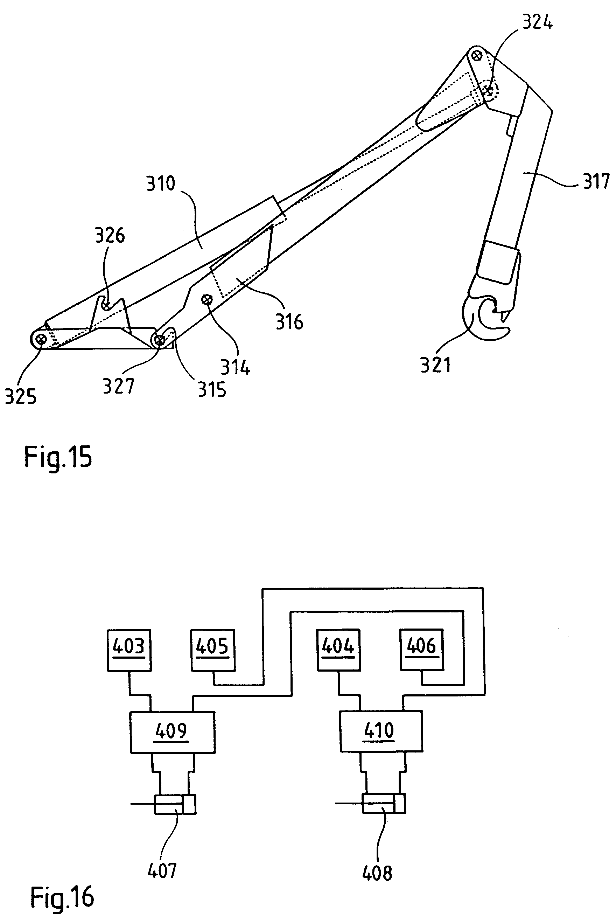

Contrairement à l'appareil 203, la structure basculante de l'appareil 303 est inflexible sous l'effet du vérin de basculement entre la position de début ou de fin de basculement (figure 13) et la position de pose ou de prise au sol (figure 15), c'est-à-dire pendant la totalité du basculement, les moyens d'engagement pour les membres d'articulation 314 et 315 dont est muni le cadre 307 étant adaptés à laisser le premier membre d'articulation 314 libre de pivoter vis à vis du cadre autour du deuxième axe de basculement 327 entre la position de changement de membre d'articulation (figure 14) et la position de prise ou de pose au sol : ici le bras rigide fait partie de la potence 308, il est formé par la poutrelle 316.

Plus précisément, les moyens d'engagement dont est muni le cadre, comportent pour le premier membre d'articulation 314 : une gorge 401, procurée par la fourche 400, adaptée à recevoir le membre 314 et à le soutenir dans une position où son axe central coïncide avec l'axe de basculement 326 correspondant ; un doigt non représenté sur les figures 13 à 16, mais similaire au doigt 50 (figures 11 et 12) mobile entre une position où la gorge 401 est ouverte avec le membre d'articulation 314 libre d'y rentrer ou d'en sortir, et une position où la gorge 401 est fermée avec le membre d'articulation 414 qui y est retenu en place ; et des moyens d'actionnement pour ce doigt mobile.

Les moyens d'engagement dont est muni le cadre 307 prévoient d'une façon similaire une gorge 402 pour le membre d'articulation 315.

Les moyens d'actionnement du doigt mobile de la gorge 401 sont adaptés à l'actionner pour fermer cette gorge quand le membre d'articulation 314 s'y est mis en place, et à l'actionner pour ouvrir la gorge 401 quand le doigt mobile de la gorge 402 ferme cette dernière.

Ainsi que montré schématiquement sur la figure 40, les moyens d'actionnement pour le doigt mobile de la gorge 401 et pour celui de la gorge 402 comportent, pour chacune des gorges 401 et 402 : un détecteur de présence, respectivement 403 et 404, pour détecter si le membre d'articulation est en place ou non dans sa gorge ; un détecteur de fermeture, respectivement 405 et 406, pour détecter si le doigt mobile ferme ou non sa gorge ; et un actionneur lié mécaniquement au doigt mobile, et relié au détecteur de présence de la gorge du membre d'articulation et au détecteur de fermeture de la gorge de l'autre membre d'articulation.

Chaque actionneur comporte ici un vérin, respectivement 407 et 408, piloté par une unité de commande, respectivement 409 et 410, reliée au détecteur de présence de sa gorge et au détecteur de fermeture de l'autre gorge.

On notera que dans chacun des exemples de réalisation, la distance entre le premier axe de basculement 226 ou 326 et le deuxième axe de basculement 227 ou 327, est de l'ordre de 10 à 15 % de la distance entre le crochet 221 ou 321 et le premier axe de basculement entre la position de début ou de fin de basculement et la position de changement de membre d'articulation, c'est-à-dire au rayon de pivotement du crochet entre ces deux positions.

Cela permet de placer les moyens d'engagement pour les premier et deuxième membres d'articulation sur une même traverse du cadre, ce qui est avantageux sur le plan de la fabrication. D'une façon générale, cet avantage devrait pouvoir être conservé tant que le ratio précité reste inférieur à 20 %.

On observera également que l'angle dont bascule le crochet autour du premier axe de basculement 226 ou 326 entre la position de début ou de fin de basculement et la position de changement de membre d'articulation, est très inférieur à l'angle dont bascule le crochet autour du deuxième axe de basculement 227 ou 327 entre la position de changement de membre d'articulation et la position de prise ou de pose au sol.

Il faut en effet, vu ce qui précède, que l'angle de basculement autour du premier axe de basculement soit relativement faible : il est de l'ordre de 10 à 35 degrés dans les exemples illustrés, et devrait rester inférieur à 40 degrés.

Enfin, dans des variantes non représentées, où la charge 4 est particulièrement longue, la poutrelle 216 ou 316 est télescopique au lieu d'être à longueur fixe.

## Revendications

1. Appareil pour permettre à un véhicule (1) de prendre ou poser au sol une charge (4) telle qu'une benne, ladite benne étant munie d'une anse de levage (5) sur une face avant et de deux rails longitudinaux (6) situés respectivement à droite et à gauche sur une face inférieure de la charge, ledit appareil comportant :
- un cadre prévu pour être fixé sur le châssis (2) du véhicule ;
- une structure basculante de manutention montée sur le cadre, comportant un crochet prévu pour s'engager avec ladite anse de levage (5), ainsi qu'un premier et un deuxième membres transversaux d'articulation prévus pour procurer respectivement audit crochet soit un premier, soit un deuxième axe transversal de basculement, ladite structure basculante admettant une position de prise ou de pose au sol où ledit crochet est derrière le véhicule à une hauteur lui permettant de s'engager avec ou de se libérer de ladite anse de levage (5) d'une dite charge (4) posée sur le sol, et une position de transport où elle présente à l'avant un tronçon vertical ou à peu près au sommet duquel se trouve ledit crochet ; et
- un vérin de basculement (210; 310) disposé entre le cadre et la structure basculante, pour faire basculer cette dernière entre ladite position de prise ou de pose au sol et une position de début ou de fin de basculement, la structure basculante étant adaptée à coopérer avec le cadre de sorte qu'il existe une position de changement de membre d'articulation entre ladite position de début ou de fin de basculement et ladite position de prise ou de pose au sol, ledit crochet pivotant autour dudit premier axe de basculement entre la position de début ou de fin de basculement et la position de changement de membre d'articulation, et autour du deuxième axe de basculement entre la position de changement de membre d'articulation et la position de prise ou de pose au sol ;
ledit appareil étant caractérisé en ce que le vérin de basculement (210 ; 310) est articulé sur la structure basculante (208, 209 ; 308) autour d'un premier axe transversal de vérin (224 ; 324) qui se trouve, dans la position de début ou de fin de basculement, en avant d'un deuxième axe transversal de vérin (225 ; 325) autour duquel celui-ci est articulé sur le cadre (207 ; 307), alors que dans la position de prise ou de pose au sol, le premier axe transversal de vérin (224, 324) se trouve en arrière du deuxième axe transversal de vérin (225, 325).

2. Appareil selon la revendication 1, caractérisé en ce que ledit premier axe de basculement (226 ; 326), tel qu'il est situé dans ladite position de début ou de fin de basculement, est au dessus et en arrière dudit deuxième axe de vérin (225 ; 325), ledit premier axe de vérin (224 ; 324) étant lui-aussi au dessus dudit deuxième axe de vérin (225 ; 325) dans ladite position de début ou de fin de basculement.

3. Appareil selon l'une quelconque des revendications 1 ou 2, caractérisé en ce que ledit deuxième axe de basculement (227 ; 327), tel qu'il est situé dans ladite position de prise ou de pose au sol, est en dessous et en arrière dudit premier axe de basculement (226 ; 326) tel qu'il est situé dans ladite position de début ou de fin de basculement, ledit premier axe de vérin (224 ; 324) étant au dessus dudit deuxième axe de vérin (225 ; 325) dans ladite position de prise ou de pose au sol.

4. Appareil selon l'une quelconque des revendications 1 à 3, caractérisé en ce que ladite structure basculante comporte une potence (208 ; 308) prévue pour être déformée entre ladite position de transport et ladite position de début ou de fin de basculement pour faire reculer ou avancer ladite charge (4) sur ledit véhicule (1), ladite potence comportant :
- une poutrelle (216 ; 316) horizontale ou à peu près dans ladite position de transport où elle est située sensiblement au niveau du cadre (207 ; 307), ladite poutrelle basculant à l'arrière autour dudit premier ou dudit deuxième axe de basculement (226, 227 ; 326, 327) et comportant des moyens d'articulation grâce auxquels le vérin de basculement est articulée sur ladite poutrelle autour dudit premier axe de vérin (224 ; 324) ;
- une équerre (217 ; 317) comportant ledit tronçon vertical ou à peu près de la structure basculante, articulée à l'avant de ladite poutrelle autour d'un axe transversal (218 ; 318) de déformation ; et
- un vérin de potence (219 ; 319) pour faire pivoter ladite équerre vis à vis de ladite poutrelle autour dudit axe de déformation, ledit vérin de potence étant prévu pour être utilisé entre lesdites position de transport et position de début ou de fin de basculement.

5. Appareil selon la revendication 4, caractérisé en ce que ladite équerre comporte un nez (223) situé en arrière dudit axe de déformation (218) dans ladite position de transport, adapté à venir prendre appui sur ledit cadre (207) de l'appareil ou sur ledit châssis (2) du véhicule quand la potence se déforme de ladite position de transport à ladite position de début ou de fin de basculement, de sorte que le premier axe de vérin (224) est légèrement soulevé de ladite position de transport à ladite position de début ou de fin de basculement.

6. Appareil selon l'une quelconque des revendications 1 à 5, caractérisé en ce que :
- ladite structure basculante (208, 209 ; 308) incorpore un bras rigide (209 ; 316) portant lesdits premier et deuxième membres d'articulation (214, 215 ; 314 ; 315), et est adaptée à rester inflexible sous l'effet du vérin de basculement (210 ; 310) au moins entre ladite position de début ou de fin de basculement et ladite position de changement de membre d'articulation ; et
- le cadre (207 ; 307) comporte des moyens d'engagement pour mettre en prise lesdits premier et deuxième membres d'articulation que porte ledit bras rigide, adaptés à ce que le premier membre d'articulation (214 ; 314) soit en prise vis à vis du cadre au moins entre ladite position de début ou de fin de basculement et ladite position de changement de membre d'articulation, et à ce que le deuxième membre d'articulation (215 ; 315) soit libre de pivoter vis à vis du cadre entre ladite position de début ou de fin de basculement et ladite position de changement de membre d'articulation, et soit en prise vis à vis du cadre entre ladite position de changement de membre d'articulation et ladite position de prise ou de pose au sol.

7. Appareil selon la revendication 6, caractérisé en ce que lesdits moyens d'engagement sont adaptés à laisser ledit premier membre d'articulation (314) libre de pivoter vis à vis du cadre (307) autour dudit deuxième axe de basculement (327) entre ladite position de changement de membre d'articulation et ladite position de prise ou de pose au sol, ladite structure basculante (308) étant adaptée à rester également inflexible entre ces positions.

8. Appareil selon la revendication 7 avec la revendication 6 combinée à l'une quelconque des revendications 4 ou 5, caractérisé en ce que ledit bras rigide est formé par ladite poutrelle (316) que comporte la structure basculante (308).

9. Appareil selon l'une quelconque des revendications 7 ou 8, caractérisé en ce que lesdits moyens d'engagement dont est muni le cadre (307) comportent pour chacun desdits premier et deuxième membres d'articulation (314, 315) :
- une gorge (401, 402) adaptée à le recevoir et à le soutenir ;
- un doigt mobile entre une position où la gorge est ouverte avec son membre d'articulation libre d'y rentrer ou d'en sortir, et une position où la gorge est fermée avec son membre d'articulation qui y est retenu en place par le doigt mobile ; et
- des moyens d'actionnement pour le doigt mobile, adaptés à l'actionner pour fermer la gorge quand le membre d'articulation s'y est mis en place, et à l'actionner pour ouvrir la gorge quand le doigt mobile de l'autre gorge ferme cette dernière.

10. Appareil selon la revendication 9, caractérisé en ce que lesdits moyens d'actionnement pour le doigt mobile comportent, pour chacun desdits premier et deuxième membre d'articulation (314, 315) :
- un détecteur de présence (403, 404) pour détecter si le membre d'articulation est en place ou non dans sa gorge ;
- un détecteur de fermeture (405, 406) pour détecter si le doigt mobile ferme ou non sa gorge ;
- un actionneur lié mécaniquement au doigt mobile, et relié au détecteur de présence de la gorge du membre d'articulation et au détecteur de fermeture de la gorge de l'autre membre d'articulation.

11. Appareil selon la revendication 10, caractérisé en ce que chaque dit actionneur comporte un vérin (407, 408) piloté par une unité de commande (409, 410) reliée au détecteur de présence de sa gorge (403, 404) et au détecteur de fermeture de l'autre gorge (406, 405).

12. Appareil selon la revendication 6, caractérisé en ce que lesdits moyens d'engagement dont est muni le cadre (207) sont adaptés à maintenir ledit bras rigide (209) en prise sur le cadre entre ladite position de changement de membre d'articulation et ladite position de prise ou de pose au sol, le reste (208) de ladite structure basculante étant adapté, entre ces positions, sous l'effet du vérin de basculement (210), à pivoter vis à vis du bras rigide (209) autour dudit deuxième axe de basculement (227).

13. Appareil selon la revendication 12 avec la revendication 6 combinée à l'une quelconque des revendications 4 ou 5, caractérisé en ce que ledit reste de la structure basculante est formé par ladite potence (208) dont ladite poutrelle (216) comporte :
- des moyens de montage à rotation qui coopèrent avec ledit deuxième membre d'articulation (215) afin que ladite potence soit articulée vis à vis du bras rigide autour de l'axe central du deuxième membre d'articulation ; et
- un moyen de butée (284) disposé par rapport au bras rigide de sorte qu'il laisse ladite potence (208) libre de pivoter vers l'arrière vis à vis du bras rigide (209), alors qu'il rentre en contact avec un premier moyen de butée (283) du bras rigide pour interdire à ladite potence de pivoter vers l'avant vis à vis du bras rigide au delà d'une position prédéterminée.

14. Appareil selon la revendication 13, caractérisé en ce que ledit bras rigide (209) comporte à l'arrière un deuxième moyen de butée (277) qui se rapproche du cadre de ladite position de début ou de fin de basculement à ladite position de changement de membre d'articulation où ledit moyen de butée rentre en contact avec le cadre, et vice-versa de ladite position de changement de membre d'articulation à ladite position de début ou de fin de basculement.

15. Appareil selon l'une quelconque des revendications 13 ou 14, caractérisé en ce que lesdits moyens d'engagement dont est muni le cadre (207) comportent :
- un moyen de butée (233) dont se rapproche un deuxième moyen de butée (277) du bras rigide de ladite position de début ou de fin de basculement à ladite position de changement de membre d'articulation où ledit deuxième moyen de butée (277) rentre en contact avec ledit moyen de butée du cadre, et vice-versa de ladite position de changement de membre d'articulation à ladite position de début ou de fin de basculement ;
- un becquet (273) sous lequel vient se mettre en regard un mentonnet (274) du bras rigide (209) de ladite position de début ou de fin de basculement à ladite position de changement de membre d'articulation, et vice-versa de ladite position de changement de membre d'articulation à ladite position de début ou de fin de basculement ; et
- un organe de mise en prise (272 ; 420) pour le premier membre d'articulation (214), adapté à au moins le soutenir entre ladite position de début ou de fin de basculement et ladite position de changement de membre d'articulation, et à lui laisser une certaine liberté entre une position prédéterminée de la structure basculante et ladite position de prise ou de pose au sol.

16. Appareil selon la revendication 15, caractérisé en ce qu'il comporte des moyens d'engagement par obstacle entre le becquet (273) et le mentonnet (274).

17. Appareil selon l'une quelconque des revendications 15 à 16, caractérisé en ce que l'organe de mise en prise du premier membre d'articulation (214) comporte un méplat horizontal ou à peu près (420) le long duquel le premier membre d'articulation (214) est adapté à glisser entre la position de début ou de fin de basculement glisser position de changement de membre d'articulation, ledit appareil comportant des moyens de montage du bras rigide (212) sur le cadre, adaptés à permettre au bras rigide de reprendre, entre la position de début ou de fin de basculement et la position de changement de membre d'articulation, des efforts s'exerçant sur la poutrelle (216) suivant une direction définie par le premier axe de vérin (224) et l'axe central du deuxième membre d'articulation (215).

18. Appareil selon l'une quelconque des revendications 12 à 17, caractérisé en ce qu'il comporte :
- un troisième membre d'articulation (279) porté à l'arrière par ledit bras rigide (209), lequel arrière du bras rigide se trouve à l'arrière du véhicule (1), ledit troisième membre d'articulation (279) étant dans une position de bennage, où son axe central coïncide avec un axe transversal de bennage (280), quand la structure basculante (208, 209) est dans ladite position de transport, et dans une position abaissée quand le bras rigide (209) est maintenu au cadre (207) entre la position de changement de membre d'articulation et la position de prise ou de pose au sol ;
- des moyens d'immobilisation pouvant agir pour immobiliser vis à vis du cadre le troisième membre d'articulation (279) dans ladite position de bennage ; et
- des moyens de rigidification pouvant agir pour empêcher ledit reste (208) de la structure basculante de pivoter vis à vis du bras rigide (209), afin de rendre inflexible sous l'effet du vérin de basculement (210) ladite structure basculante ;
lesdits moyens d'engagement dont est muni le cadre, étant adaptés à laisser ledit premier membre d'articulation (214) libre de pivoter vis à vis du cadre (207) autour dudit axe de bennage (280) à partir de ladite position de transport, de sorte que quand agissent lesdits moyens de rigidification et lesdits moyens d'immobilisation, l'actionnement du vérin de basculement (210) à partir de la position de transport a pour effet de faire pivoter ladite structure basculante (208, 209), qui reste inflexible, autour dudit axe de bennage (280).

19. Appareil selon la revendication 18, caractérisé en ce qu'il comporte, sur chacun des côtés droit et gauche, pour coopérer avec ledit rail longitudinal (6) respectivement droit ou gauche de la face inférieure de ladite charge (4), un membre de soutien (213) solidarisé audit bras rigide (209) coaxialement audit troisième membre d'articulation (279).

20. Appareil selon la revendication 19, caractérisé en ce qu'il comporte en outre, sur chacun des côtés droit et gauche, pour coopérer avec ledit rail longitudinal (6) respectivement droit ou gauche, un galet (211) monté à rotation sur le cadre (207) en avant dudit membre de soutien (213) et au niveau ou à peu près de celui-ci quand ladite structure basculante (208, 209) est dans ladite position de transport, ledit galet (211) étant prévu pour que ledit rail (6) prenne appui et roule sur lui au cours des manoeuvres de prise ou de pose au sol.

21. Appareil selon l'une quelconque des revendications 19 à 20, caractérisé en ce que lesdits moyens d'immobilisation du troisième membre d'articulation (279) comportent :
- au moins un levier (212) qui est articulé à l'arrière sur ledit troisième membre d'articulation (279), et, en avant du troisième membre d'articulation (279), sur un tourillon transversal fixé au cadre (207), ledit levier (212) se prolongeant vers l'avant au delà dudit tourillon ;
- un organe d'immobilisation (236) lié au cadre et mobile par rapport à celui-ci entre une position rétractée et une position sortie, prévu pour changer de position quand ledit troisième membre d'articulation (279) est dans ladite position de bennage, adapté dans sa position sortie à être engagé avec ledit levier (212) par l'avant pour l'immobiliser vis à vis du cadre, et à être désengagé dudit levier dans sa dite position rétractée pour le laisser libre de pivoter autour dudit tourillon ; et
- des moyens d'actionnement dudit organe d'immobilisation (236), pour le faire passer de ladite position rétractée à ladite position sortie ou vice-versa.

22. Appareil selon l'une quelconque des revendications 18 à 21, caractérisé en ce que lesdits moyens d'immobilisation du troisième membre d'articulation sont adaptés à être automatiquement rendus actifs lorsque la structure basculante passe de la position de début ou de fin de basculement à la position de transport, qui sont distinctes, et vice-versa.

23. Appareil selon la revendication 22 combinée à la revendication 21, caractérisé en ce que lesdits moyens d'actionnement comportent un mécanisme adapté à être entraîné entre ladite position de début ou de fin de basculement et ladite position de transport par une butée mâle de positionnement (31) prévue sur ladite face inférieure de la charge (4), et à entraîner à son tour l'organe d'immobilisation (236) entre la position sortie et la position rétractée.

24. Appareil selon l'une quelconque des revendications 18 à 23, caractérisé en ce que lesdits moyens de rigidification de la structure basculante sont adaptés à être automatiquement rendus actifs lorsque la structure basculante passe de la position de début ou de fin de basculement à la position de transport, qui sont distinctes, et vice-versa.

25. Appareil selon l'une quelconque des revendications 1 à 24, caractérisé en ce que la distance entre le premier membre d'articulation et le deuxième membre d'articulation est inférieur à 20 % de la distance entre le crochet (221 ; 321) et le premier membre d'articulation, dans la position de début ou de fin de basculement.

## Claims

1. Apparatus for enabling a vehicle (1) to pick up or put down on the ground a load (4) such as a skip, the said skip being provided with a lifting eye (5) on a front face and two longitudinal rails (6) situated respectively on the right and left hand side of the lower face of the load, the said apparatus comprising:
- a frame which is arranged to be fixed on the chassis (2) of the vehicle;
- a tilting manipulating structure mounted on the frame, comprising a hook arranged to engage with the said lifting eye (5), together with a first transverse articulating member and a second transverse articulating member, which are arranged to define for the hook, respectively, either a first or a second transverse tilting axis, the said tilting structure being arranged to assume a pick up or set down position in which the said hook is behind the vehicle at a height at which it can engage with, or be released from, the said lifting eye (5) of a said load (4) positioned on the ground, and a transport position in which it has at the front a vertical or nearly vertical portion, at the top of which the said hook is situated; and
- a tilting jack (210; 310) disposed between the frame and the tilting structure, so as to cause this latter to tilt between the said pick up or set down position and a position for starting or finishing tilting, the tilting structure being adapted to cooperate with the frame in such a way that there exists a position for changing the articulation member between the said position for starting or finishing tilting and the said pick up or set down position, with the said hook pivoting about the said first tilting axis between the position for starting or finishing tilting and the position for changing the articulating member, and about the second tilting axis between the position for changing the articulating member and the pick up or set down position;
the said apparatus being characterised in that the tilting jack (210; 310) is articulated on the tilting structure (208, 209; 308) about a first transverse jack axis (224; 324) which, in the position for starting or finishing tilting, is in front of a second transverse jack axis (225; 325) about which the latter is articulated on the frame (207; 307), while in the pick up or set down position, the first transverse jack axis (224; 324) is behind second transverse jack axis (225; 325).

2. Apparatus according to Claim 1, characterised in that, when it is situated in the said position for starting or finishing tilting, the first tilting axis (226; 326) is above and behind the said second jack axis (225; 325), with the said first jack axis (224; 324) being itself also above the said second jack axis (225; 325) in the said position for starting or finishing tilting.

3. Apparatus according to Claim 1 or Claim 2, characterised in that, when it is situated in the said pick up or set down position, the said second tilting axis (227; 327) is below and behind the said first tilting axis (226; 326) as it is situated in the said position for starting or finishing tilting, the said first jack axis (224; 324) being above the said second jack axis (225; 325) in the said pick up or set down position.

4. Apparatus according to any one of Claims 1 to 3, characterised in that the said tilting structure includes a jib (208; 308) which is arranged to be deformed between the said transport position and the said position for starting or finishing tilting, so as to cause the said load (4) to be withdrawn on to or to advance from the said vehicle (1), the said jib comprising:
- a support beam (216; 316), which is horizontal or nearly horizontal in the said transport position, in which it lies substantially at the level of the frame (207; 307), the said support beam tilting rearwardly about the said first or the said second tilting axis (226, 227; 326, 327) and comprising articulating means by virtue of which the tilting jack is articulated on the said support beam about the said first jack axis (224; 324);
- a fork (217; 317) including the said vertical or nearly vertical portion of the tilting structure, and articulated to the front of the said support beam about a transverse deformation axis (218; 318); and
- a jib jack (219; 319) for causing the said fork to pivot with respect to the said support beam about the said deformation axis, the said jib jack being arranged to be employed between the said transport position and position for starting or finishing tilting.

5. Apparatus according to Claim 4, characterised in that the said fork has a nose (223) situated behind the said deformation axis (218) in the said transport position, being adapted to come into engagement on the said frame (207) of the apparatus or on the said chassis (2) of the vehicle when the jib is deformed from the said transport position to the said position for starting or finishing tilting, in such a way that the first jack axis (224) is slightly raised from the said transport position to the said position for starting or finishing tilting.

6. Apparatus according to any one of Claims 1 to 5, characterised in that:
- the said tilting structure (208, 209; 308) incorporates a rigid arm (209; 316) carrying the said first and second articulating members (214, 215; 314; 315), and is adapted to remain inflexible under the force exerted by the tilting jack (210; 310), at least between the said position for starting or finishing tilting and the said position for changing the articulating member; and
- the frame (207; 307) comprises engagement means for engagement with the said first and second articulating members carried by the said rigid arm, and adapted so that the first articulating member (214; 314) is in engagement with respect to the frame at least between the said position for starting or finishing tilting and the said position for changing the articulating member, and so that the second articulating member (215; 315) is free to pivot with respect to the frame between the said position for starting or finishing tilting and the said position for changing the articulating member, and is in engagement with respect to the frame between the said position for changing the articulating member and the said pick up or set down position.

7. Apparatus according to Claim 6, characterised in that the said engagement means are adapted to allow the said first articulating member (314) to be free to pivot with respect to the frame (307) about the said second tilting axis (327) between the said position for changing the articulating member and the said pick up or set down position, the said tilting structure (308) being adapted so as to remain inflexible between these positions also.

8. Apparatus according to Claim 7 with Claim 6 combined with either Claim 4 or Claim 5, characterised in that the said rigid arm is defined by the said support beam (316) comprised in the tilting structure (308).

9. Apparatus according to Claim 7 or Claim 8, characterised in that the said engagement means, with which the frame (307) is provided, includes, for each of the said first and second articulating members (314, 315):
- a groove (401, 402) which is adapted to receive and support it;
- a finger which is movable between a position in which the groove is open with its articulating member being free to enter or leave it, and a position in which the groove is closed with its articulating member which is retained in place therein by the movable finger; and
- actuating means for the movable finger, adapted to actuate it so as to close the groove when the articulating member is put into position therein, and to actuate it so as to open the groove when the movable finger of the other groove closes this latter.

10. Apparatus according to Claim 9, characterised in that the said actuating means for the movable finger include, for each of the said first and second articulating members (314, 315):
- a proximity detector (403, 404) for detecting whether the articulating member is or is not in place in its groove;
- a closure detector (405, 406) for detecting whether the movable finger closes or does not close its groove;
- an actuator which is coupled mechanically to the movable finger, and which is connected to the detector for proximity of the groove to the articulating member and to the detector for closure of the groove by the other articulating member.

11. Apparatus according to Claim 10, characterised in that each said actuator comprises a jack (407, 408) controlled by a control unit (409, 410) which is connected to the detector (403, 404) for proximity of its groove and to the closure detector (406, 405) of the other groove.

12. Apparatus according to Claim 6, characterised in that the said engagement means, with which the frame (207) is provided, are adapted for maintaining the said rigid arm (209) in position on the frame between the said position for changing the articulating member and the said pick up or set down position, the remainder (208) of the said tilting structure being adapted so as, between these positions, to be caused by the tilting jack (210) to pivot with respect to the rigid arm (209) about the said second tilting axis (227).

13. Apparatus according to Claim 12 with Claim 6 combined with Claim 4 or Claim 5, characterised in that the said remainder of the tilting structure consists of the said jib (208), the said support beam (216) of which comprises:
- means for rotatable mounting which cooperates with the said second articulating member (215) so that the said jib is articulated with respect to the rigid arm about the central axis of the second articulating member; and
- an abutment means (284) which is disposed with respect to the rigid arm in such a way that it leaves the said jib (208) free to pivot rearwardly with respect to the rigid arm (209), while it makes contact with a first abutment means (283) of the rigid arm so as to prevent the said jib from pivoting forward with respect to the rigid arm beyond a predetermined position.

14. Apparatus according to Claim 13, characterised in that the said rigid arm (209) includes at the rear a second abutment means (277) which moves closer to the frame from the said position for starting or finishing tilting to the said position for changing the articulation member in which the said abutment means makes contact with the frame, and vice versa from the said position for changing the articulating member to the said position for starting or finishing tilting.

15. Apparatus according to Claim 13 or Claim 14, characterised in that the said engagement means, with which the frame (207) is provided, comprise:
- an abutment means (233) to which a second abutment means (277) of the rigid arm moves closer from the said position for starting or finishing tilting to the said position for changing the articulating member in which the said second abutment means (277) makes contact with the said abutment means of the frame, and vice versa from the said position for changing the articulating member to the said position for starting or finishing tilting;
- a nib (273) below which a catch (274) of the rigid arm (209) comes into facing relationship therewith from the said position for starting or finishing tilting to the said position for changing the articulating member, and vice versa from the said position for changing the articulating member to the said position for starting or finishing tilting; and
- an engagement member (272; 420) for the first articulating member (214), adapted so as to support it at least between the said position for starting or finishing tilting and the said position for changing the articulating member, and to allow it a certain freedom between a predetermined position of the tilting structure and the said pick up or set down position.

16. Apparatus according to Claim 15, characterised in that it includes inter-engagement means between the nib (273) and the catch (274).

17. Apparatus according to Claim 15 or Claim 16, characterised in that the engagement member of the first articulating member (214) comprises a horizontal or nearly horizontal flat (420) along which the first articulating member (214) is adapted to slide between the position for starting or finishing tilting and the position for changing the articulating member, the said apparatus including means for mounting the rigid arm (212) on the frame, adapted to permit the rigid arm to take, between the position for starting or finishing tilting and the position for changing the articulating member, forces which are exerted on the support beam (216) in a direction defined by the first jack axis (224) and the central axis of the second articulating member (215).

18. Apparatus according to any one of Claims 12 to 17, characterised in that it includes:
- a third articulating member (279) carried at the rear by the said rigid arm (209), the said rear of the rigid arm lying at the rear of the vehicle (1), the said third articulating member (279) being in a tipping position, in which its central axis is coincident with a transverse tipping axis (280), when the tilting structure (208, 209) is in the said transport position, and in a lowered position when the rigid arm (209) is held to the frame (207) between the position for changing the articulating member and the pick up or set down position;
- immobilising means which can act so as to immobilise the third articulating member (279) with respect to the frame in the said tipping position; and
- stiffening means for acting so as to prevent the said remainder (208) of the tilting structure from pivoting with respect to the rigid arm (209), whereby to render the said tilting structure inflexible under the force exerted by the tilting jack (210);
the said engagement means, with which the frame is provided, being adapted to leave the said first articulating member (214) free to pivot with respect to the frame (207) about the said tipping axis (280), going from the said transport position, so that when the said stiffening means and the said immobilising means are in action, the actuation of the tilting jack (210) going from the transport position has the effect of causing the said tilting structure (208, 209), which remains inflexible, to pivot about the said tipping axis (280).

19. Apparatus according to Claim 18, characterised in that it includes, on each of its right and left hand sides, for cooperation with the said longitudinal rail (6) on the right or left hand side respectively of the lower face of the said load (4), a support member (213) which is fixed with respect to the said rigid arm (209) coaxially with the said third articulating member (279).

20. Apparatus according to Claim 19, characterised in that it further includes, on each of its right and left hand sides, for cooperation with the said longitudinal rail (6) on the right or left hand side respectively, a roller (211) mounted rotatably on the frame (207) in front of the said support member (213) and at, or substantially at, the level of the latter when the said tilting structure (208, 209) is in the said transport position, the said roller (211) being arranged in such a way that the said rail (6) bears and rolls on it during operations for picking up from or setting down on the ground.

21. Apparatus according to Claim 19 or Claim 20, characterised in that the said immobilising means of the third articulating member (279) include:
- at least one lever (212) which is articulated at the rear on the said third articulating member (279), and, in front of the third articulating member (279), on a transverse trunnion fixed to the frame (207), the said lever (212) being extended forwardly beyond the said trunnion;
- an immobilising member (236) coupled to the frame and movable with respect to the latter between a retracted position and an extended position, being arranged to change its position when the said third articulating member (279) is in the said tipping position, being adapted in its extended position to be engaged with the said lever (212) at the front so as to immobilise it with respect to the frame, and to be disengaged from the said lever in its said retracted position so as to leave it free to pivot about the said trunnion; and
- actuating means for the said immobilising member (236), for causing it to pass from the said retracted position to the said extended position or vice versa.

22. Apparatus according to any one of Claims 18 to 21, characterised in that the said immobilising means of the third articulating member are adapted to be automatically activated when the tilting structure passes from the position for starting or finishing tilting to the transport position, which are separate, and vice versa.

23. Apparatus according to Claim 22 in combination with Claim 21, characterised in that the said actuating means comprise a mechanism which is adapted to be driven between the said position for starting or finishing tilting and the said transport position by a male positioning abutment (31) arranged on the said lower face of the load (4), and to drive, in its turn, the immobilising member (236) between the extended position and the retracted position.

24. Apparatus according to any one of Claims 18 to 23, characterised in that the said stiffening means of the tilting structure are adapted to be automatically activated when the tilting structure passes from the position for starting and finishing tilting to the transport position, which are separate, and vice versa.

25. Apparatus according to any one of Claims 1 to 24, characterised in that the distance between the first articulating member and the second articulating member is less than 20% of the distance between the hook (221; 321) and the first articulating member, in the position for starting or finishing tilting.

## Patentansprüche

1. Gerät, das einem Fahrzeug (1) ermöglicht, eine Ladung (4), wie beispielsweise einen Wagenkasten, aufzunehmen oder auf dem Boden abzusetzen, wobei der Wagenkasten auf einer Vorderseite mit einem Hebebügel (5) und zwei jeweils rechts und links auf einer Unterseite der Ladung angeordneten longitudinalen Schienen (6) versehen ist, wobei das Gerät folgendes aufweist:
- einen Rahmen, der dafür vorgesehen ist, auf dem Fahrgestell (2) des Fahrzeugs befestigt zu werden;
- eine auf dem Rahmen angebrachte ausklappbare Beförderungsstruktur, die einen Haken, welcher dafür vorgesehen ist, in den Hebebügel (5) einzugreifen, sowie ein erstes und ein zweites transversales Gelenkglied aufweist, die dafür vorgesehen sind, dem Haken jeweils entweder eine erste oder eine zweite transversale Kippachse zu verschaffen, wobei die ausklappbare Struktur eine Position des Aufnehmens oder des Absetzens auf dem Boden, bei der sich der Haken hinter dem Fahrzeug auf einer Höhe befindet, die es ihm ermöglicht, in den Hebebügel (5) einer auf dem Boden abgesetzten Ladung (4) einzugreifen oder sich von ihm zu lösen, und eine Transportposition zuläßt, bei der sie vorne einen vertikalen oder näherungsweise vertikalen Abschnitt zeigt, auf dessen Spitze sich der Haken befindet; und
- einen Kippzylinder (210; 310), der zwischen dem Rahmen und der ausklappbaren Struktur angeordnet ist, um diese letztere zwischen der Position des Aufnehmens oder des Absetzens auf dem Boden und einer Anfangs- oder Endkipposition kippen zu lassen, wobei die ausklappbare Struktur dafür ausgelegt ist, mit dem Rahmen so zusammenzuwirken, daß eine Wechselposition des Gelenkglieds zwischen der Anfangs- oder Endkipposition und der Position des Aufnehmens oder des Absetzens auf dem Boden existiert, wobei sich der Haken zwischen der Anfangs- oder Endkipposition und der Wechselposition des Gelenkglieds um die erste Kippachse und zwischen der Wechselposition des Gelenkglieds und der Position des Aufnehmens oder des Absetzens auf dem Boden um die zweite Kippachse dreht;
wobei das Gerät dadurch gekennzeichnet ist, daß der Kippzylinder (210; 310) auf der ausklappbaren Struktur (208, 209; 308) um eine erste transversale Zylinderachse (224; 324) gelenkig gelagert ist, welche sich in der Anfangs- oder Endkipposition vor einer zweiten transversalen Zylinderachse (225; 325), um die diese auf dem Rahmen (207; 307) gelenkig gelagert ist, befindet, während` sich die erste transversale Zylinderachse (224; 324) in der Position des Aufnehmens oder des Absetzens auf dem Boden hinter der zweiten transversalen Zylinderachse (225; 325) befindet.

2. Gerät nach Anspruch 1, dadurch gekennzeichnet, daß sich die erste Kippachse (226; 326), wenn sie in der Anfangs- oder Endkipposition ist, oberhalb und hinter der zweiten Zylinderachse (225; 325) befindet, wobei sich die erste Zylinderachse (224; 324) in der Anfangs- oder Endkipposition auch oberhalb der zweiten Zylinderachse (225; 325) befindet.

3. Gerät nach einem der Ansprüche 1 oder 2, dadurch gekennzeichnet, daß sich die zweite Kippachse (227; 327), wenn sie in der Position des Aufnehmens oder des Absetzens auf dem Boden ist, unterhalb und hinter der ersten Kippachse (226; 326) befindet, wenn sie in der Anfangs- oder Endkipposition ist, wobei die erste Zylinderachse (224; 324) sich in der Position des Aufnehmens oder des Absetzens auf dem Boden oberhalb der zweiten Zylinderachse (225; 325) befindet.

4. Gerät nach einem der Ansprüche 1 bis 3, dadurch gekennzeichnet, daß die ausklappbare Struktur eine Auslegerstruktur (208; 308) aufweist, die dafür vorgesehen ist, zwischen der Transportposition und der Anfangs- oder Endkipposition deformiert zu werden, um die Ladung (4) auf dem Fahrzeug (1) vor- oder zurückzuschieben, wobei die Auslegerstruktur folgendes aufweist:
- einen Träger (216; 316), der in der Transportposition, in der er im wesentlichen auf der Ebene des Rahmens (207; 307) ist, horizontal oder näherungsweise horizontal ist, wobei der Träger hinten um die erste oder die zweite Kippachse (226, 227; 326, 327) kippt und Gelenkmittel aufweist, durch die der Kippzylinder gelenkig auf dem Träger um die erste Zylinderachse (224; 324) gelagert ist;
- einen Winkel (217; 317), der den vertikalen oder näherungsweise vertikalen Abschnitt der ausklappbaren Struktur aufweist und der vorne am Träger um eine transversale Deformationsachse (218; 318) gelenkig gelagert ist; und
- einen Auslegerfuß (219; 319), um den Winkel gegenüber dem Träger sich um die Deformationsachse drehen zu lassen, wobei der Auslegerfuß dafür vorgesehen ist, zwischen der Transportposition und der Anfangs- oder Endkipposition verwendet zu werden.

5. Gerät nach Anspruch 4, dadurch gekennzeichnet, daß der Winkel eine Nase (223) aufweist, die in der Transportposition hinter der Deformationsachse (218) gelegen und dafür ausgelegt ist, gegen den Rahmen (207) des Geräts oder gegen das Fahrgestell (2) des Fahrzeugs zur Anlage zu kommen, wenn sich die Auslegerstruktur von der Transportposition zur Anfangs- oder Endkipposition deformiert, so daß die erste Zylinderachse (224) leicht aus der Transportposition in die Anfangs- oder Endkipposition angehoben wird.

6. Gerät nach einem der Ansprüche 1 bis 5, dadurch gekennzeichnet, daß:
- die ausklappbare Struktur (208, 209; 308) einen starren Arm (209; 316) beinhaltet, der die ersten und zweiten Gelenkglieder (214, 215; 314; 315) trägt und dafür ausgelegt ist, unter der Wirkung des Kippzylinders (210; 310) zumindest zwischen der Anfangs- oder Endkipposition und der Wechselposition des Gelenkglieds steif zu bleiben; und
- der Rahmen (207; 307) Eingriffsmittel aufweist, um die ersten und zweiten Gelenkglieder, die der starre Arm trägt, in Eingriff zu bringen, die so ausgelegt sind, daß das erste Gelenkglied (214; 314) gegenüber dem Rahmen mindestens zwischen der Anfangs- oder Endkipposition und der Wechselposition des Gelenkglieds in Eingriff steht und daß das zweite Gelenkglied (215; 315) frei ist, sich zwischen der Anfangs- oder Endkipposition und der Wechselposition des Gelenkglieds gegenüber dem Rahmen zu drehen, und zwischen der Wechselposition des Gelenkglieds und der Position des Aufnehmens oder des Absetzens auf dem Boden gegenüber dem Rahmen in Eingriff steht.

7. Gerät nach Anspruch 6, dadurch gekennzeichnet, daß die Eingriffsmittel so ausgelegt sind, daß sie das erste Gelenkglied (314) frei lassen, so daß es sich zwischen der Wechselposition des Gelenkglieds und der Position des Aufnehmens oder des Absetzens auf dem Boden gegenüber dem Rahmen (307) um die zweite Kippachse (327) drehen kann, wobei die ausklappbare Struktur (308) so ausgelegt ist, daß sie auch zwischen diesen Positionen steif bleibt.

8. Gerät nach Anspruch 7, wobei der Anspruch 6 mit einem der Ansprüche 4 oder 5 kombiniert ist, dadurch gekennzeichnet, daß der starre Arm durch den Träger (316) gebildet wird, den die ausklappbare Struktur (308) aufweist.

9. Gerät nach einem der Ansprüche 7 oder 8, dadurch gekennzeichnet, daß die Eingriffsmittel, mit denen der Rahmen (307) versehen ist, für sowohl das erste als auch das zweite Gelenkglied (314, 315) folgendes aufweisen:
- eine Auskehlung (401, 402), die dafür ausgelegt ist, es aufzunehmen und abzustützen;
- einen Zapfen, der beweglich ist zwischen einer Position, in der die Auskehlung geöffnet ist, wobei ihr Gelenkglied frei ist, in sie zurückzukehren oder aus ihr auszutreten, und einer Position, in der die Auskehlung mit ihrem Gelenkglied, welches dort an Ort und Stelle durch den beweglichen Zapfen zurückgehalten wird, verschlossen ist; und
- Betätigungsmittel für den beweglichen Zapfen, die dafür ausgelegt sind, ihn in Bewegung zu setzen, um die Auskehlung zu verschließen, wenn das Gelenkglied dort eingesetzt ist, und ihn in Bewegung zu setzen, um die Auskehlung zu öffnen, wenn der bewegliche Zapfen der anderen Auskehlung diese letztere verschließt.

10. Gerät nach Anspruch 9, dadurch gekennzeichnet, daß die Betätigungsmittel für den beweglichen Zapfen für sowohl das erste als auch das zweite Gelenkglied (314, 315) folgendes aufweisen:
- einen Anwesenheitsdetektor (403, 404) um zu detektieren, ob sich das Gelenkglied in seiner Auskehlung an Ort und Stelle befindet oder nicht;
- einen Verschlußdetektor (405, 406), um zu detektieren, ob der bewegliche Zapfen seine Auskehlung verschließt oder nicht;
- ein Wirkglied, das mechanisch mit dem beweglichen Zapfen verbunden ist und das mit dem Anwesenheitsdetektor der Auskehlung des Gelenkglieds und mit dem Verschlußdetektor der Auskehlung des anderen Gelenkglieds verbunden ist.

11. Gerät nach Anspruch 10, dadurch gekennzeichnet, daß jedes der Wirkglieder ein Stellglied (407, 408) aufweist, das durch eine Steuereinheit (409, 410), die mit dem Anwesenheitsdetektor ihrer Auskehlung (403, 404) und mit dem Verschlußdetektor der anderen Auskehlung (406, 405) verbunden ist, gesteuert wird.

12. Gerät nach Anspruch 6, dadurch gekennzeichnet, daß die Eingriffsmittel, mit denen der Rahmen (207) versehen ist, dafür ausgelegt sind, den starren Arm (209) auf dem Rahmen zwischen der Wechselposition des Gelenkglieds und der Position des Aufnehmens oder des Absetzens auf dem Boden in Eingriff zu halten, wobei der Rest (208) der ausklappbaren Struktur dafür ausgelegt ist, sich zwischen diesen Positionen unter der Wirkung des Kippzylinders (210) gegenüber dem starren Arm (209) um die zweite Kippachse (227) zu drehen.

13. Gerät nach Anspruch 12, wobei Anspruch 6 mit einem der Ansprüche 4 oder 5 kombiniert ist, dadurch gekennzeichnet, daß der Rest der ausklappbaren Struktur durch die Auslegerstruktur (208) gebildet wird, deren Träger (216) folgendes aufweist:
- Mittel zur drehbaren Anbringung, die mit dem zweiten Gelenkglied (215) zusammenwirken, so daß die Auslegerstruktur gegenüber dem starren Arm um die zentrale Achse des zweiten Gelenkglieds gelenkig angebracht ist; und
- ein Anschlagmittel (284), das bezüglich des starren Arms so angeordnet ist, daß es die Auslegerstruktur (208) frei läßt, so daß diese sich nach hinten gegenüber dem starren Arm (209) drehen kann, während es mit einem ersten Anschlagmittel (283) des starren Arms zurück in Kontakt kommt, um zu verhindern, daß die Auslegerstruktur sich gegenüber dem starren Arm nach vorne über eine vorgegebene Position hinaus dreht.

14. Gerät nach Anspruch 13, dadurch gekennzeichnet, daß der starre Arm (209) hinten ein zweites Anschlagmittel (277) aufweist, das sich an den Rahmen von der Anfangs- oder Endkipposition zur Wechselposition des Gelenkglieds, bei der das Anschlagmittel wieder in Kontakt mit dem Rahmen kommt, und umgekehrt von der Wechselposition des Gelenkglieds zur Anfangs- oder Endkipposition annähert.

15. Gerät nach einem der Ansprüche 13 oder 14, dadurch gekennzeichnet, daß die Eingriffsmittel, mit denen der Rahmen (207) versehen ist, folgendes aufweisen:
- ein Anschlagmittel (233), an das sich ein zweites Anschlagmittel (277) des starren Arms von der Anfangs- oder Endkipposition zur Wechselposition des Gelenkglieds, bei der das zweite Anschlagmittel (277) wieder in Kontakt mit dem Anschlagmittel des Rahmens kommt, und umgekehrt von der Wechselposition des Gelenkglieds zur Anfangs- oder Endkipposition annähert;
- einen Fortsatz (273), unter welchem eine Nase (274) des starren Arms (209) von der Anfangs- oder Endkipposition zur Wechselposition des Gelenkglieds und umgekehrt von der Wechselposition des Gelenkglieds zur Anfangs- oder Endkipposition gegenüber zu liegen kommt; und
- ein Organ (272; 420) zum Eingreifen für das erste Gelenkglied (214), das dafür ausgelegt ist, es zumindest zwischen der Anfangs- oder Endkipposition und der Wechselposition des Gelenkglieds abzustützen und ihm zwischen einer vorgegebenen Position der ausklappbaren Struktur und der Position des Aufnehmens oder des Absetzens auf dem Boden eine gewisse Freiheit zu lassen.

16. Gerät nach Anspruch 15, dadurch gekennzeichnet, daß es zwischen dem Fortsatz (273) und der Nase (274) hemmende Eingriffsmittel aufweist.

17. Gerät nach einem der Ansprüche 15 bis 16, dadurch gekennzeichnet, daß das Organ zum Eingreifen des ersten Gelenkglieds (214) eine horizontale oder näherungsweise horizontale Abflachung (420) aufweist, wobei das erste Gelenkglied (214) dafür ausgelegt ist, auf deren Länge zwischen der Anfangs- oder Endkipposition und der Wechselposition des Gelenkglieds zu gleiten, wobei das Gerät Mittel (212) zur Anbringung des starren Arms auf dem Rahmen aufweist, die dafür ausgelegt sind, es dem starren Arm zu ermöglichen, zwischen der Anfangs- oder Endkipposition und der Wechselposition des Gelenkglieds Belastungen aufzunehmen, die auf den Träger (216) entlang einer Richtung ausgeübt werden, welche durch die erste Zylinderachse (224) und die zentrale Achse des zweiten Gelenkglieds (215) definiert wird.

18. Gerät nach einem der Ansprüche 12 bis 17, dadurch gekennzeichnet, daß es folgendes aufweist:
- ein drittes Gelenkglied (279), das hinten vom starren Arm (209) getragen wird, wobei das Rückteil des starren Arms sich hinten am Fahrzeug (1) befindet und wobei das dritte Gelenkglied (279) sich in einer Wagenkastenposition befindet, in der seine zentrale Achse mit einer transversalen Wagenkastenachse (280) zusammenfällt, wenn die ausklappbare Struktur (208, 209) sich in der Transportposition befindet, und sich in einer abgesenkten Position befindet, wenn der starre Arm (209) am Rahmen (207) zwischen der Wechselposition des Gelenkglieds und der Position des Aufnehmens oder des Absetzens auf dem Boden gehalten wird;
- Blockierungsmittel, die so wirken können, daß sie das dritte Gelenkglied (279) in der Wagenkastenposition gegenüber dem Rahmen blockieren; und
- Erstarrungsmittel, die so wirken können, daß sie den Rest (208) der ausklappbaren Struktur daran hindern, sich gegenüber dem starren Arm (209) zu drehen, um die ausklappbare Struktur unter der Wirkung des Kippzylinders (210) steif zu machen;
wobei die Eingriffsmittel, mit denen der Rahmen versehen ist, dafür ausgelegt sind, das erste Gelenkglied (214) frei zu lassen, so daß es sich ausgehend von der Transportposition gegenüber dem Rahmen (207) um die Wagenkastenachse (280) drehen kann, so daß, wenn die Erstarrungsmittel und die Blockierungsmittel wirken, die Betätigung des Kippzylinders (210) ausgehend von der Transportposition den Effekt hat, die ausklappbare Struktur (208, 209), welche steif bleibt, sich um die Wagenkastenachse (280) drehen zu lassen.

19. Gerät nach Anspruch 18, dadurch gekennzeichnet, daß es sowohl auf der rechten als auch auf der linken Seite ein Stützglied (213) aufweist, das am starren Arm (209) koaxial zum dritten Gelenkglied (279) haftet, um jeweils mit der rechten oder linken longitudinalen Schiene (6) der Unterseite der Ladung (4) zusammenzuwirken.

20. Gerät nach Anspruch 19, dadurch gekennzeichnet, daß es außerdem sowohl auf der rechten als auch auf der linken Seite zum Zusammenwirken mit jeweils der rechten oder der linken longitudinalen Schiene (6) eine Rolle (211) aufweist, die auf dem Rahmen (207) vor dem Stützglied (213) und auf seiner Ebene oder näherungsweise auf seiner Ebene zur Rotation angebracht ist, wenn sich die ausklappbare Struktur (208, 209) in der Transportposition befindet, wobei die Rolle (211) dafür vorgesehen ist, daß die Schiene (6) an ihr zum Anschlag kommt und während der Betätigungen des Aufnehmens oder des Absetzens auf dem Boden auf ihr läuft.

21. Gerät nach einem der Ansprüche 19 bis 20, dadurch gekennzeichnet, daß die Blockierungsmittel des dritten Gelenkglieds (279) folgendes aufweisen:
- zumindest einen Hebel (212), der hinten auf dem dritten Gelenkglied (279) und, vor dem dritten Gelenkglied (279), auf einem am Rahmen (207) befestigten transversalen Drehzapfen gelenkig gelagert ist, wobei der Hebel (212) sich jenseits des Drehzapfens nach vorne verlängert;
- ein Blockierungsorgan (236), das mit dem Rahmen verbunden ist und bezüglich diesem zwischen einer zurückgezogenen Position und einer Ausgangsposition beweglich ist, das dafür vorgesehen ist, die Position zu wechseln, wenn das dritte Gelenkglied (279) sich in der Wagenkastenposition befindet, das dafür ausgelegt ist, in seiner Ausgangsposition mit dem Hebel (212) durch die Vorderseite in Eingriff zu kommen, um ihn gegenüber dem Rahmen zu blockieren, und in seiner zurückgezogenen Position vom Hebel entkoppelt zu werden, um ihn frei zu lassen, so daß er sich um den Drehzapfen drehen kann; und
- Mittel zur Betätigung des Blockierungsorgans (236), um es von der zurückgezogenen Position in die Ausgangsposition, oder umgekehrt, übergehen zu lassen.

22. Gerät nach einem der Ansprüche 18 bis 21, dadurch gekennzeichnet, daß die Blockierungsmittel des dritten Gelenkglieds dafür ausgelegt sind, automatisch aktiviert zu werden, wenn die ausklappbare Struktur von der Anfangs- oder Endkipposition in die Transportposition, welche verschieden sind, und umgekehrt, überzugehen.

23. Gerät nach Anspruch 22 kombiniert mit Anspruch 21, dadurch gekennzeichnet, daß die Betätigungsmittel einen Mechanismus aufweisen, der dafür ausgelegt ist, zwischen der Anfangs- oder Endkipposition und der Transportposition durch einen auf der Unterseite der Ladung (4) vorgesehenen männlichen Positionierungsanschlag (31) mitgeführt zu werden und seinerseits das Blockierungsorgan (236) zwischen der Ausgangsposition und der zurückgezogenen Position mitzuführen.

24. Gerät nach einem der Ansprüche 18 bis 23, dadurch gekennzeichnet, daß die Erstarrungsmittel der ausklappbaren Struktur dafür ausgelegt sind, automatisch aktiviert zu werden, wenn die ausklappbare Struktur von der Anfangs- oder Endkipposition in die Transportposition, welche verschieden sind, und umgekehrt, übergeht.

25. Gerät nach einem der Ansprüche 1 bis 24, dadurch gekennzeichnet, daß der Abstand zwischen dem ersten Gelenkglied und dem zweiten Gelenkglied weniger als 20% des Abstands zwischen dem Haken (221; 321) und dem ersten Gelenkglied in der Anfangs- oder Endkipposition beträgt.
